# EUROPEAN PATENT SPECIFICATION

(11) **EP 4 022 963 B1**
(45) Date of publication and mention of the grant of the patent: **02.08.2023**
(21) Application number: 20764070.7
(22) Date of filing: 26.08.2020
(51) Int. Cl.: H04W 24/10, H04W 36/00

(54) **HANDLING OF MISMATCH BETWEEN IDLE MODE MEASUREMENT CONFIGURATIONS IN SOURCE AND TARGET CELLS DURING CELL RE-SELECTION**
HANDHABUNG VON FEHLANPASSUNGEN ZWISCHEN RUHEMODUSMESSKONFIGURATIONEN IN QUELL- UND ZIELZELLEN WÄHREND DER ZELLENNEUAUSWAHL
GESTION DE NON-CONCORDANCE ENTRE DES CONFIGURATIONS DE MESURE DE MODE VEILLE DANS DES CELLULES SOURCES ET CIBLES PENDANT UNE RESÉLECTION DE CELLULE

(30) Priority: 28.08.2019 US 201962892860 P
(43) Date of publication of application: 06.07.2022
(73) Proprietor: Telefonaktiebolaget LM Ericsson (publ), 164 83 Stockholm (SE)
(72) Inventor: RUGELAND, Patrik, 117 58 STOCKHOLM (SE); TEYEB, Oumer, 171 44 SOLNA (SE); DA, SILVA, Icaro, L, J, 170 77 SOLNA (SE)
(74) Representative: Ericsson
(86) International application number: PCT/EP2020/073868
(87) International publication number: WO 2021/037921

(56) References cited:
- WO-A1-2020/197460
- US-A1- 2020 252 823
- US-A1- 2020 260 308
- ERICSSON: "Handling of idle/inactive measurements during inter-RAT cell reselection", 3GPP DRAFT; R2-1910251 - HANDLING OF IDLE_INACTIVE MEAS DURING INTER-RAT CELL RESELECTION, 3RD GENERATION PARTNERSHIP PROJECT (3GPP), MOBILE COMPETENCE CENTRE ; 650, ROUTE DES LUCIOLES ; F-06921 SOPHI , vol. RAN WG2, no. Prague, Czech Republic; 20190826 - 20190830 15 August 2019 (2019-08-15), XP051768030, Retrieved from the Internet: URL:http://www.3gpp.org/ftp/tsg_ran/WG2_RL 2/TSGR2_107/Docs/R2-1910251.zip [retrieved on 2019-08-15]
- HUAWEI ET AL: "Early measurements in RRC_IDLE and inter-RAT cell reselection", 3GPP DRAFT; R2-1910955, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20190826 - 20190830 16 August 2019 (2019-08-16), XP051768719, Retrieved from the Internet: URL:http://www.3gpp.org/ftp/tsg_ran/WG2_RL 2/TSGR2_107/Docs/R2-1910955.zip [retrieved on 2019-08-16]
- LG ELECTRONICS INC: "Considerations on validity area in NR", 3GPP DRAFT; R2-1911294 CONSIDERATIONS ON VALIDITY AREA IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20190826 - 20190830 16 August 2019 (2019-08-16), XP051769051, Retrieved from the Internet: URL:http://www.3gpp.org/ftp/tsg_ran/WG2_RL 2/TSGR2_107/Docs/R2-1911294.zip [retrieved on 2019-08-16]
- QUALCOMM INCORPORATED: "Discussion on interaction between cell reselection procedure and early measurements", 3GPP DRAFT; R2-1908677 -DISCUSSION ON INTERACTION BETWEEN CELL RESELECTION PROCEDURE AND EARLY MEASUREMENTS, 3RD GENERATION PARTNERSHIP PROJECT (3GPP), MOBILE COMPETENCE CENTRE ; 650, ROUTE DES LUCIOL , vol. RAN WG2, no. Prague, Czech; 20190826 - 20190830 16 August 2019 (2019-08-16), XP051766502, Retrieved from the Internet: URL:http://www.3gpp.org/ftp/tsg_ran/WG2_RL 2/TSGR2_107/Docs/R2-1908677.zip [retrieved on 2019-08-16]

## Description

### Technical Field

The present disclosure relates to idle mode measurements performed by a wireless communication device in a cellular communications system.

### Background

### 1 Carrier Aggregation (CA) and Dual Connectivity (DC) in Long Term Evolution (LTE)

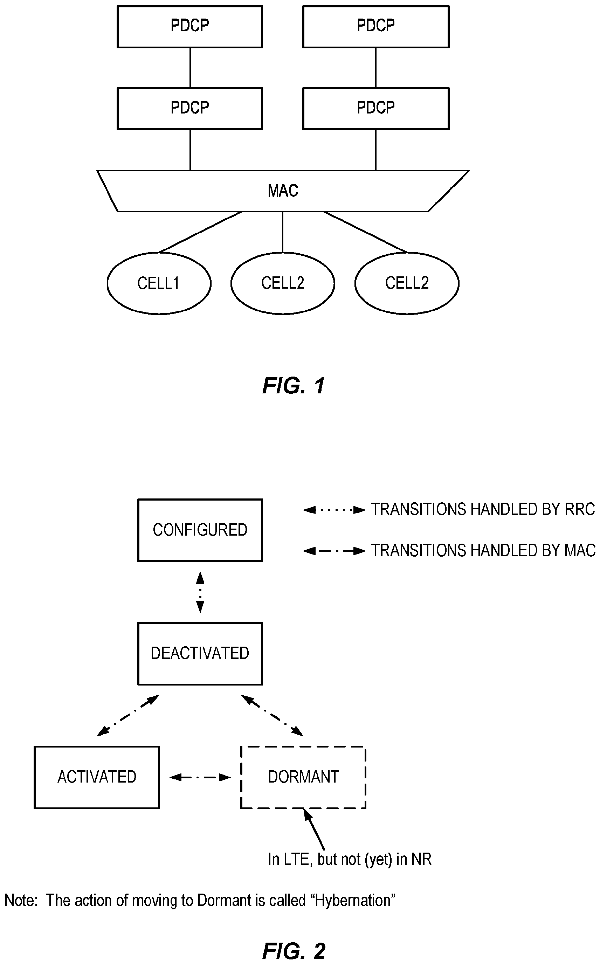

In Release 10, CA was introduced in LTE to enable the User Equipment (UE) to transmit and/or receive information via multiple cells, which are referred to as Secondary Cells (SCell(s)), from multiple carrier frequencies, to benefit from the existence of non-contiguous and contiguous carriers. In CA terminology, the Primary Cell (PCell) is the cell towards which the UE establishes the Radio Resource Control (RRC) connection or performs handover. In CA, cells are aggregated on the Medium Access Control (MAC) level. The MAC layer gets grants for a certain cell and multiplexes data from different bearers to one transport block being sent on that cell. Also, the MAC layer controls how that process is done. This is illustrated in Figure 1.

SCells can be "added" (a.k.a. "configured") for the UE using RRC signaling (e.g., RRCConnectionReconfiguration), which takes in the order of hundreds of milliseconds. A cell which is configured for the UE becomes a "serving cell" for this UE. An SCell may also be associated with an SCell state. When configured/added via RRC, an SCell starts in deactivated state. In LTE Release 15, the enhanced or evolved Node B (eNB) can indicate to activate-upon-configuration, or change the state, at least in RRCReconfiguration, as shown below, which is an excerpt from Third Generation Partnership Project (3GPP) Technical Specification (TS) 36.331 V15.3.0:

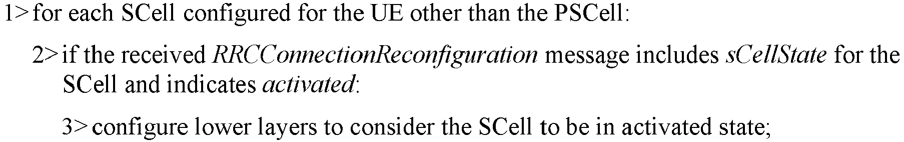

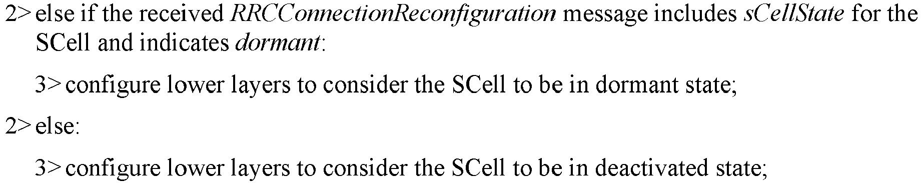

In LTE Release 15, a new intermediate state between the deactivated state and activated state has been introduced for enhanced uplink operation. This state is referred to as a dormant state. A MAC Control Element (CE) can be used to change the SCell state between the three states as shown in Figure 2. There are also timers in MAC to move a cell between deactivated/activated/dormant. These timers are:
- sCellHibernationTimer, which moves the SCell from activated state to dormant state;
- sCellDeactivationTimer;, which moves the SCell from activated state to deactivated state; and
- dormantSCellDeactivationTimer, which moves the SCell from dormant state to deactivated state.

The MAC level SCell activation takes in the order of 20-30 milliseconds (ms).

Once the network understands the need to configure and/or activate CA, the question is which cells to initially configure and/or activate, if they are configured, and/or whether a cell/carrier is good enough in terms of radio quality/coverage (e.g., Reference Signal Receive Power (RSRP) and Reference Signal Receive Quality (RSRQ)). To understand the conditions on SCell(s) or potential SCell(s) in a given available carrier, the network may configure the UE to perform Radio Resource Management (RRM) measurements.

Typically, the network may be assisted by RRM measurements to be reported by a UE. The network may configure the UE with measurement identities (IDs) associated to reportConfig with event A1 (serving cell becomes better than threshold) in case this is a configured SCell, or A4 (neighbor cell becomes better than threshold) for carriers without a configured SCell. The measurement objects are associated to the carrier for which the network wants measurements. If the network is aware of the exact cells it wants the UE to measure, a so-called white cell list can be configured in the measurement object so that the UE is only required to measure these cells in that carrier.

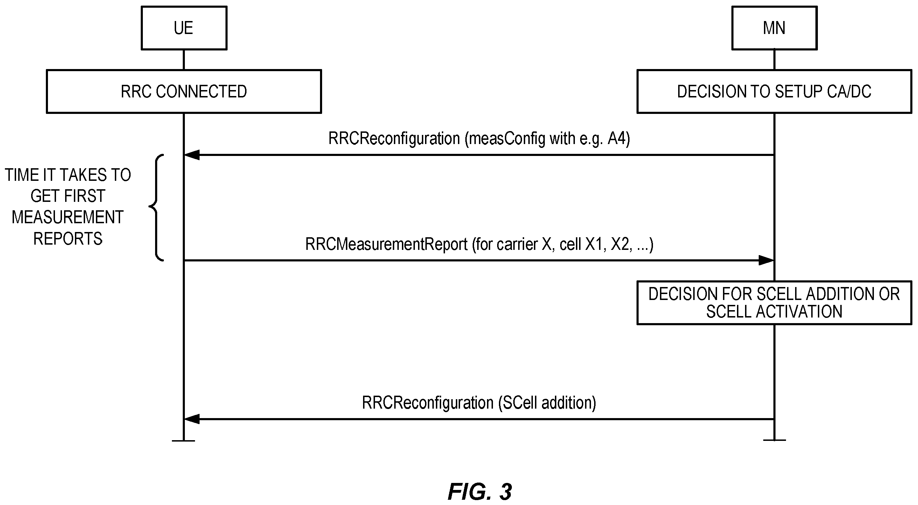

Figure 3 illustrates a process in which the network decides to setup CA or DC for a UE. The network then configures the UE to perform measurements, and the UE sends the appropriate measurement reports to the network. Based on the received measurement reports, the network makes a decision on SCell addition or SCell activation and then configures the UE to add the selected SCell(s).

With the introduction of DC in Release 12, it was possible to add what is called Secondary Cell Group (SGC) configuration to the UE. The main benefit would be that the UE could in principle add a cell from another eNB. Protocol-wise, that would require different MAC entities, one for each cell group. The UE will have two cell groups, one associated to the PCell (master node) and another associated to a Primary Secondary Cell (PSCell) (of the secondary eNB), where each group may possibly have their own associated SCells.

When it comes to adding SCells, when the UE is in single connectivity, the RRCConnectionReconfiguration message may carry a cell index so MAC identifiers are optimized, i.e., shorter, cell identifier, carrier frequency, common parameters, and state information, introduced in Release 15 (activated or dormant).

Below the *SCellToAddModList* included in the *RRCConnectionReconfiguration* is illustrated and described.

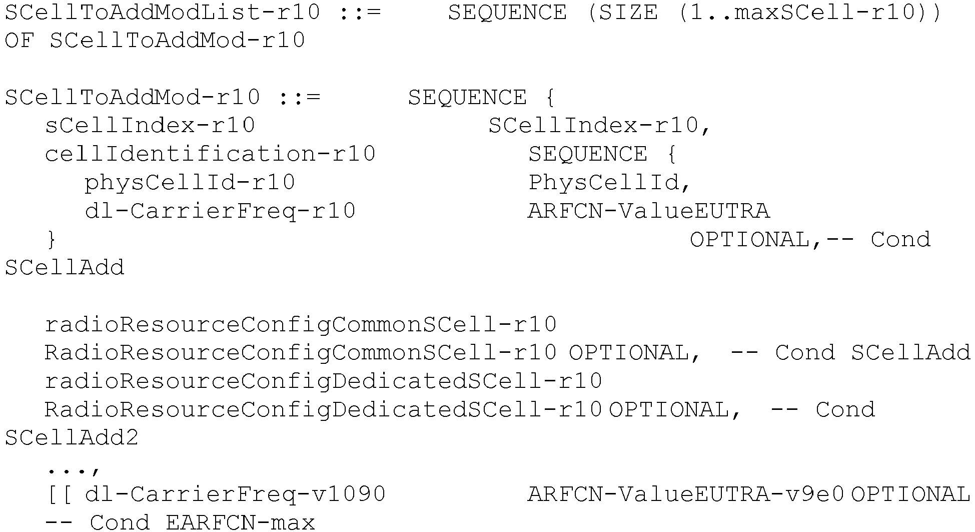

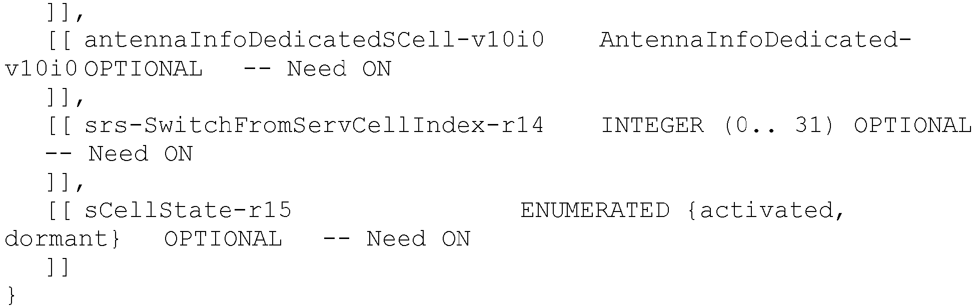

| ***RRCConnectionReconfiguration* field descriptions** |
|---|
| ***sCellConfigCommon*** |
| Indicates the common configuration for the SCell group. |
| ***sCellGroupIndex*** |
| Indicates the identity of SCell groups for which a common configuration is provided. |
| ***sCellIndex*** |
| In case of DC, the SCellIndex is unique within the scope of the UE i.e. an SCG cell can not use the same value as used for an MCG cell. For *pSCellToAddMod,* if *sCellIndex-r13* is present the UE shall ignore *sCellIndex-r12. sCellIndex-r13* in *sCellToAddModListExt-r13* shall not have same values as sCellIndex-r10 in sCellToAddModList-r10. |
| ***sCellGroupToAddModList,** s**CellGroupToAddModListSCG*** |
| Indicates the SCell group to be added or modified. E-UTRAN only configures at most 4 SCell groups per UE over all cell groups. |
| ***sCellGroupToReleaseList*** |
| Indicates the SCell group to be released. |
| ***sCellState*** |
| A one-shot field that indicates whether the SCell shall be considered to be in activated or dormant state upon SCell configuration. |
| ***sCellToAddModList, sCellToAddModListExt*** |
| Indicates the SCell to be added or modified. Field *sCellToAddModList* is used to add the first 4 SCells for a UE with *sCellIndex-r10* while *sCellToAddModListExt* is used to add the rest. If E-UTRAN includes *sCellToAddModListExt-v1430* it includes the same number of entries, and listed in the same order, as in *sCellToAddModListExt-r13.* If E-UTRAN includes *sCellToAddModList-v10*/*0* it includes the same number of entries, and listed in the same order, as in *sCellToAddModList-r10.* If E-UTRAN includes *sCellToAddModListExt-v1370* it includes the same number of entries, and listed in the same order, as in *sCellToAddModListExt-r13.* If E-UTRAN includes *sCellToAddModListExt-v13c0* it includes the same number of entries, and listed in the same order, as in *sCellToAddModListExt-r13.* |
| ***sCellToAddModListSCG, sCellToAddModListSCG-Ext*** |
| Indicates the SCG cell to be added or modified. The field is used for SCG cells other than the PSCell (which is added/ modified by field *pSCellToAddMod*). Field *sCellToAddModListSCG* is used to add the first 4 SCells for a UE with *sCellIndex-r10* while *sCellToAddModListSCG-Ext* is used to add the rest. If E-UTRAN includes *sCellToAddModListSCG-v10*/*0* it includes the same number of entries, and listed in the same order, as in *sCellToAddModListSCG-r12.* If E-UTRAN includes *sCellToAddModListSCG-Ext-v1370* it includes the same number of entries, and listed in the same order, as in *sCellToAddModListSCG-Ext-r13.* If E-UTRAN includes *sCellToAddModListSCG-Ext-v13c0* it includes the same number of entries, and listed in the same order, as in *sCellToAddModListSCG-Ext-r13.* |
| ***sCellToReleaseListSCG, sCellToReleaseListSCG-Ext*** |
| Indicates the SCG cell to be released. The field is also used to release the PSCell e.g. upon change of PSCell, upon system information change for the PSCell. |

The procedure to add (or modify) SCells to the Master Cell Group (MCG) in LTE is described by the following excerpt from 3GPP TS 36.331 V15.3.0:

### 5.3.5.3 Reception of an RRCConnectionReconfiguration not including the mobilityControllnfo by the UE

If the *RRCConnectionReconfiguration* message does not include the *mobilityControlInfo* and the UE is able to comply with the configuration included in this message, the UE shall: ... 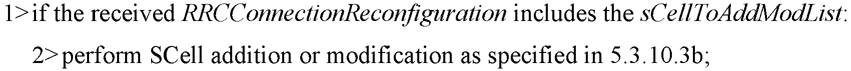 ...

### 5.3.10.3b SCell addition/ modification

The UE shall:

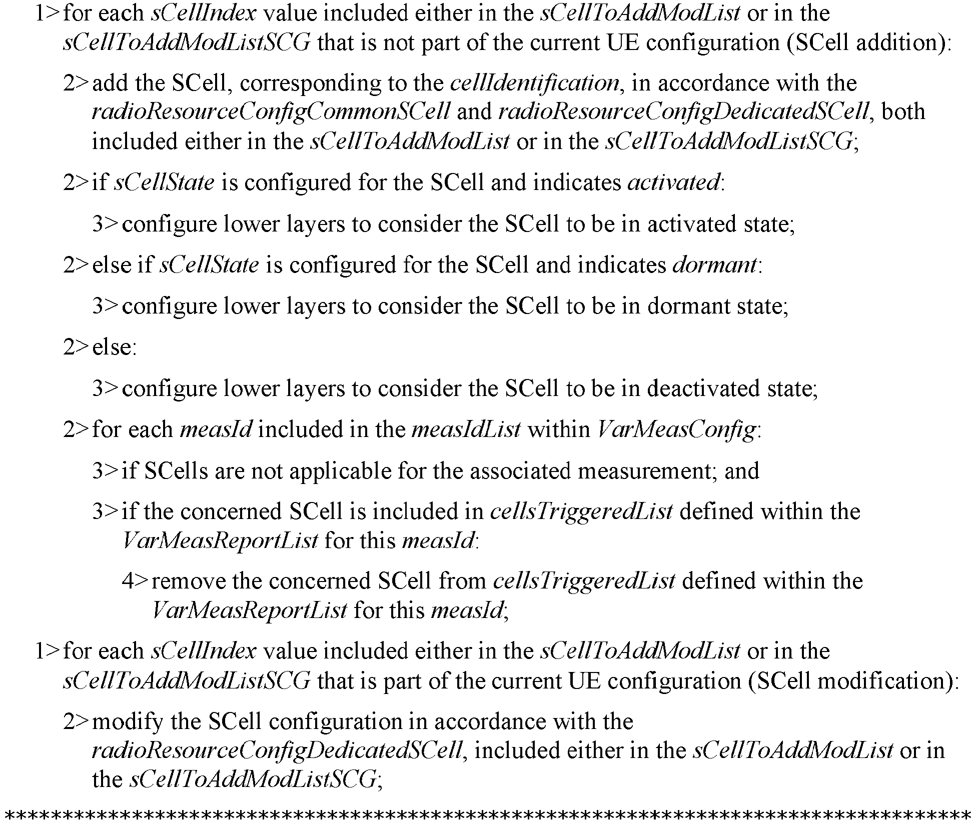

### 2 Existing solution for early measurements upon idle to connected transition in LTE (Release15)

In LTE Release 15, it is possible to configure the UE to report so-called early measurements upon the transition from idle to connected state. These measurements are measurements that the UE can perform in idle state according to a configuration provided by the source cell. The intention is for the network to receive these measurements immediately after the UE is connected such that the network can quickly set up CA and/or other forms of DC (e.g., EN-DC, MR-DC, etc.) without the need to first provide a measurement configuration (measConfig) in RRC_CONNECTED, as shown in previous sections, and then wait for hundreds of milliseconds until measurements are reported to the network.

### 2.1 Measurement configuration for early measurements upon resume in LTE

A first aspect of the existing solution, as standardized in Evolved Universal Terrestrial Radio Access (E-UTRA), is described in 3GPP TS 36.331, subclause 5.6.20 Idle Mode Measurements. The UE can receive the idle mode measurement configurations in the system information (i.e., in SIB5) in the field *MeasIdleConfigSIB-r15.* These idle mode measurement configurations can indicate up to eight cells or ranges of cell IDs on which to perform measurements. In addition, the UE can be configured upon the transition from RRC_CONNECTED to RRC_IDLE with a dedicated measurement configuration in the RRCConnectionRelease message with the *measIdleDedicated-*r15 which overrides the broadcasted configurations in SIB5. The broadcasted and dedicated signaling is shown below:

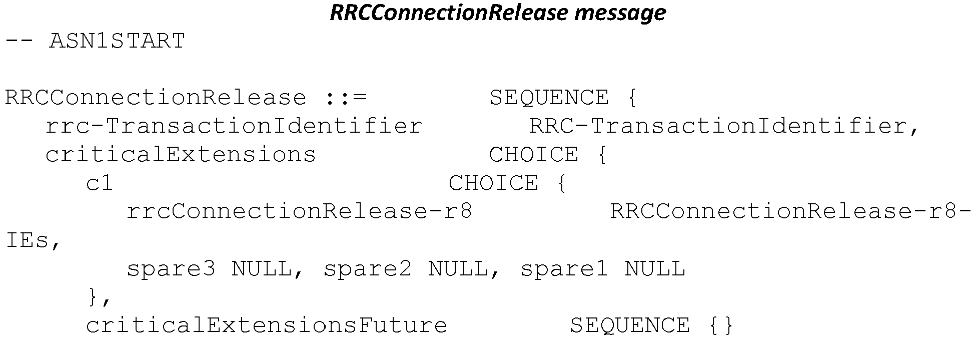

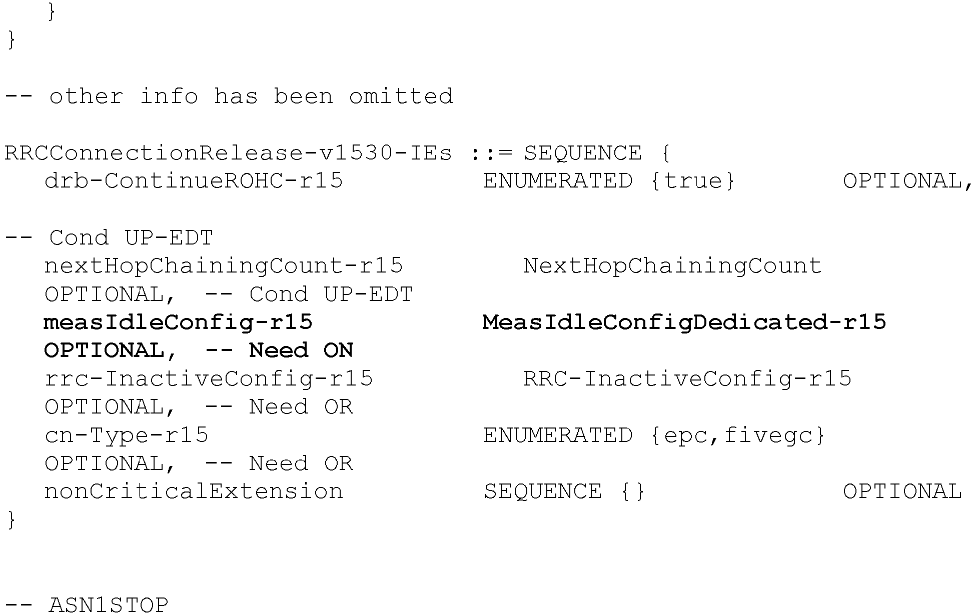

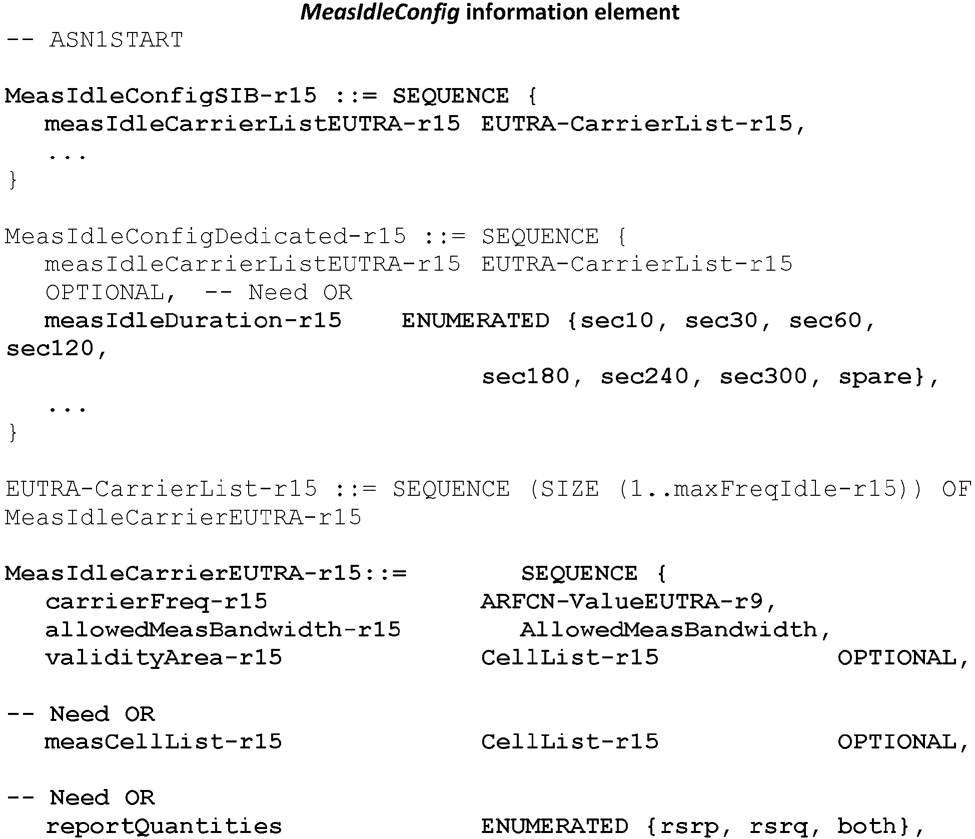

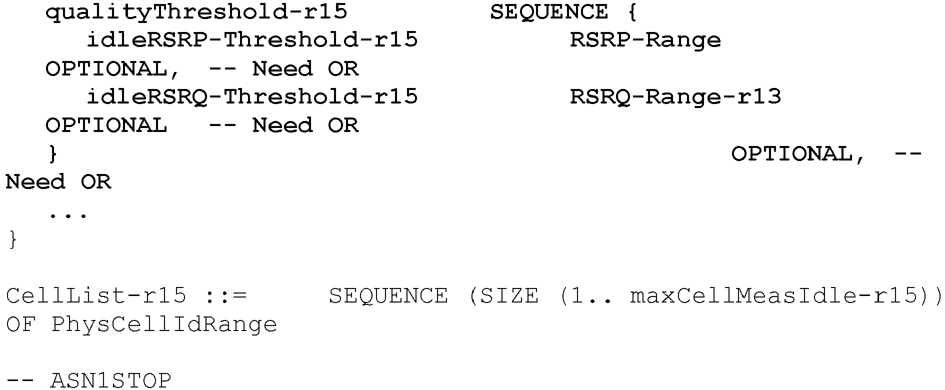

| ***MeasIdleConfig* field descriptions** |
|---|
| ***allowedMeasBandwidth*** |
| If absent, the value corresponding to the downlink bandwidth indicated by the *dl-Bandwidt*h included in *MasterInformationBlock* of serving cell applies. |
| ***carrierFreq*** |
| Indicates the E-UTRA carrier frequency to be used for measurements during IDLE mode. |
| ***measIdleCarrierListEUTRA*** |
| Indicates the E-UTRA carriers to be measured during IDLE mode. |
| ***measIdleDuration*** |
| Indicates the duration for performing measurements during IDLE mode for measurements assigned via *RRCConnectionRelease.* Value sec10 correspond to 10 seconds, value sec30 to 30 seconds and so on. |
| ***qualityThreshold*** |
| Indicates the quality thresholds for reporting the measured cells for IDLE mode measurements. |
| ***reportQuantities*** |
| Indicates which measurment quantities UE is requested to report in the IDLE mode measurement report. |
| ***measCellList*** |
| Indicates the list of cells which the UE is requested to measure and report for IDLE mode measurements. |
| ***validityArea*** |
| Indicates the list of cells within which UE is requested to do IDLE mode measurements. If the UE reselects to a cell outside this list, the measurements are no longer required. |

In regard to the carrier information and cell list, the UE is provided with a list of carriers (*measIdleCarrierListEUTRA*) and optionally with a list of cells (*measCellList*) on which the UE shall perform measurements. The fields s-NonIntraSearch in SystemInformationBlockType3 do not affect the UE measurement procedures in IDLE mode.

Upon the reception of the measurement configuration, the UE starts a timer T331 with the value provided in *measIdleDuration,* which can go from 0 to 300 seconds. The timer stops upon receiving RRCConnectionSetup, RRCConnectionResume which indicates a transition to RRC_CONNECTED. That concept exists to limit the amount of time the UE performs measurements for the purpose of early measurements.

Another concept introduced in the LTE Release 15 solution is a validity area, which comprises a list of Physical Cell Identities (PCIs). The intention is to limit the area where CA or DC may be setup later when the UE resumes/setups the connection, so the early measurements are somewhat useful for that purpose. If validityArea is configured, and the UE reselects to a serving cell whose PCI does not match any entry in validityArea for the corresponding carrier frequency, the timer T331 is stopped. Then, the UE stops to perform IDLE measurements and releases the configuration (i.e., VarMeasIdleConfig). Notice that this does not necessarily imply that the UE releases the idle measurements that were configured in Release and that were performed, i.e. these may still be stored and possibly requested by the network. In addition, the UE may continue with IDLE mode measurements according to the broadcasted SIB5 configuration after the timer T331 has expired or stopped.

Notice also that only measurements above a certain threshold (i.e., a minimum quality threshold) shall be stored as the cell candidates for CA setup need to be within a minimum acceptable threshold. How the UE performs measurements in IDLE mode is up to UE implementation as long as RAN4 requirements for measurement reporting defined in 3GPP TS 36.133 are met.

The UE behavior is shown below in more detail as captured in 3GPP TS 36.331:

### 5.6.20Idle Mode Measurements

### 5.6.20.1 General

This procedure specifies the measurements done by a UE in RRC_IDLE when it has an IDLE mode measurement configuration and the storage of the available measurements by a UE in both RRC_IDLE and RRC_CONNECTED.

### 5.6.20.2 Initiation

While T331 is running, the UE shall:

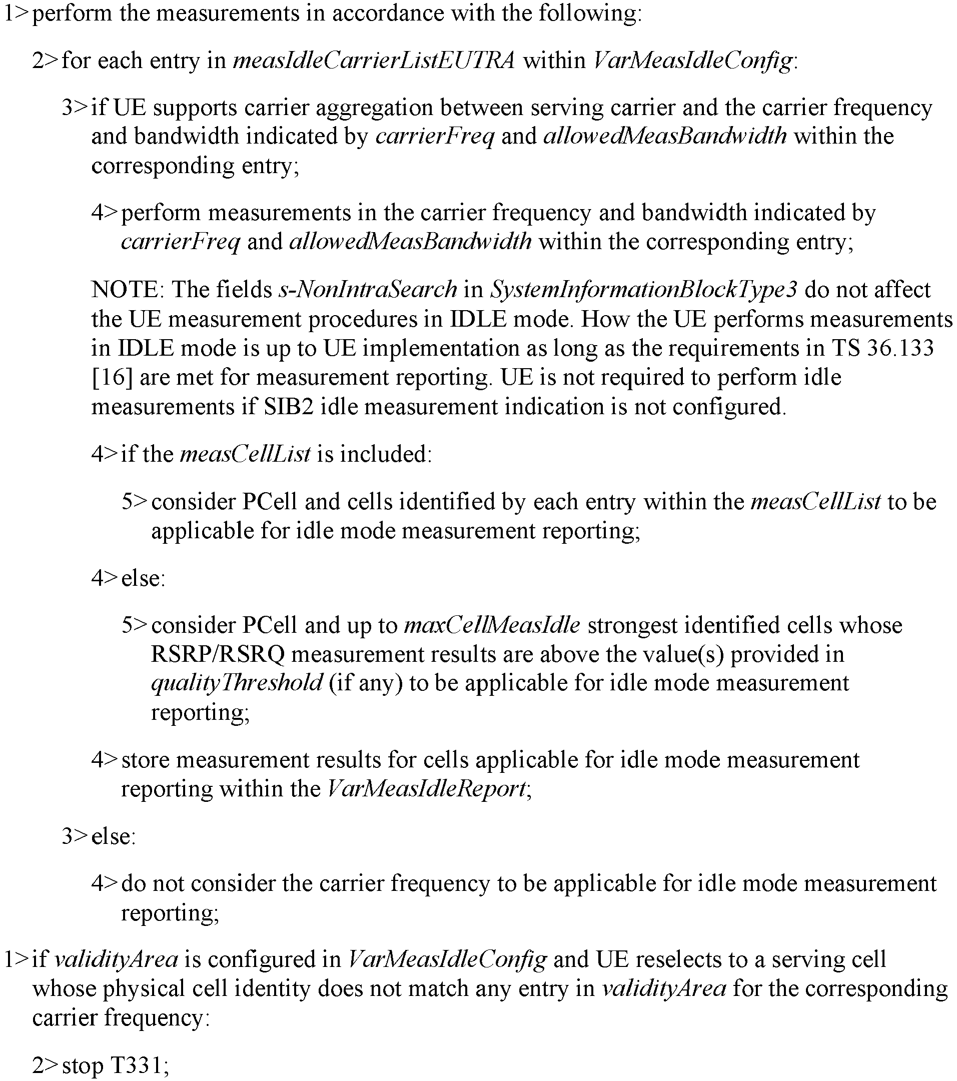

### 5.6.20.3 T331 expiry or stop

The UE shall:

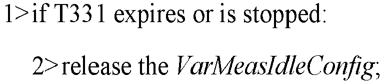

NOTE: It is up to UE implementation whether to continue IDLE mode measurements according to SIBS configuration after T331 has expired or stopped.

Notice that it is not mandatory for the source node releasing/suspending the UE to provide a dedicated idle measurement configuration for the purpose of early measurements. If the UE is released/suspended to idle without being provided with a list of carriers to be measured, the UE obtains that from SIB2, as written below:

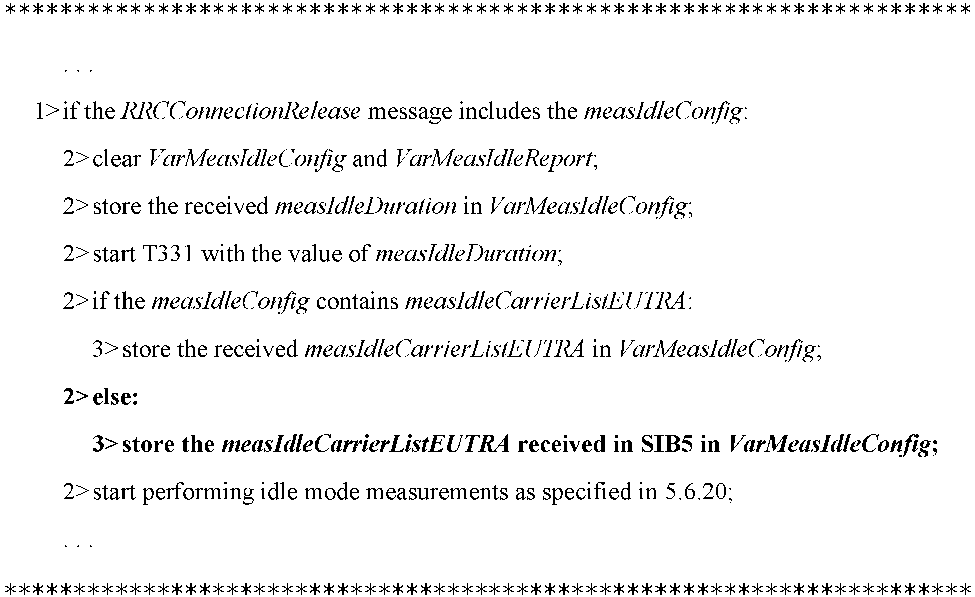

And, in that case of the list not being provided in *RRCConnectionRelease,* at every cell reselection the UE performs the SIB5 acquisition to possibly update its list of carriers to measure as shown below:

### 5.2.2.12 Actions upon reception of SystemInformationBlockType5

Upon receiving *SystemInformationBlockType5,* the UE shall: ...

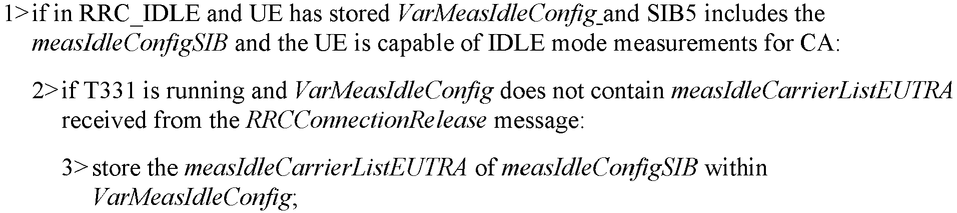

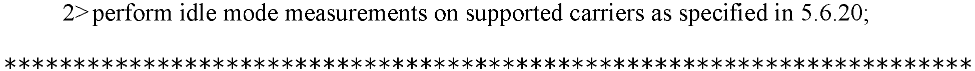

If the UE enters a cell within the validity area that is not broadcasting the measurement configuration in SIB5, the UE continues to perform idle measurements according to the SIB5 acquired in the source cell (i.e. the cell the UE was suspended or released).

### 5.3.3.4 Reception of the RRCConnectionSetup by the UE

NOTE 1: Prior to this, lower layer signalling is used to allocate a C-RNTI. For further details see TS 36.321 [6];

The UE shall:

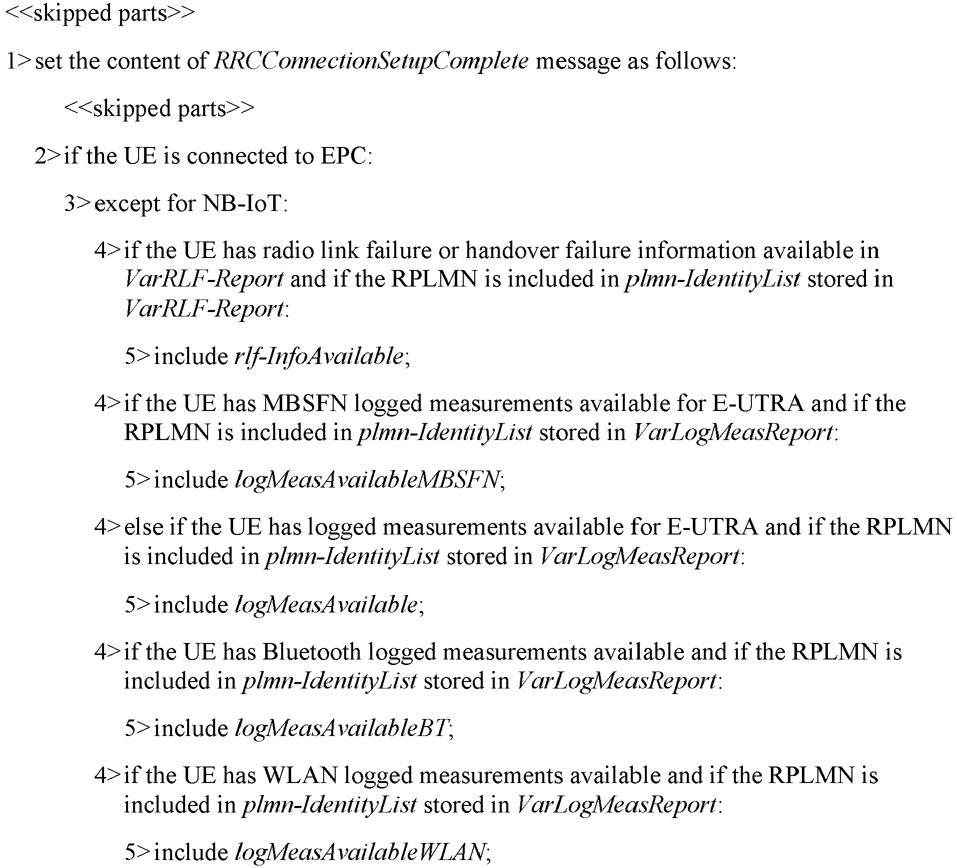

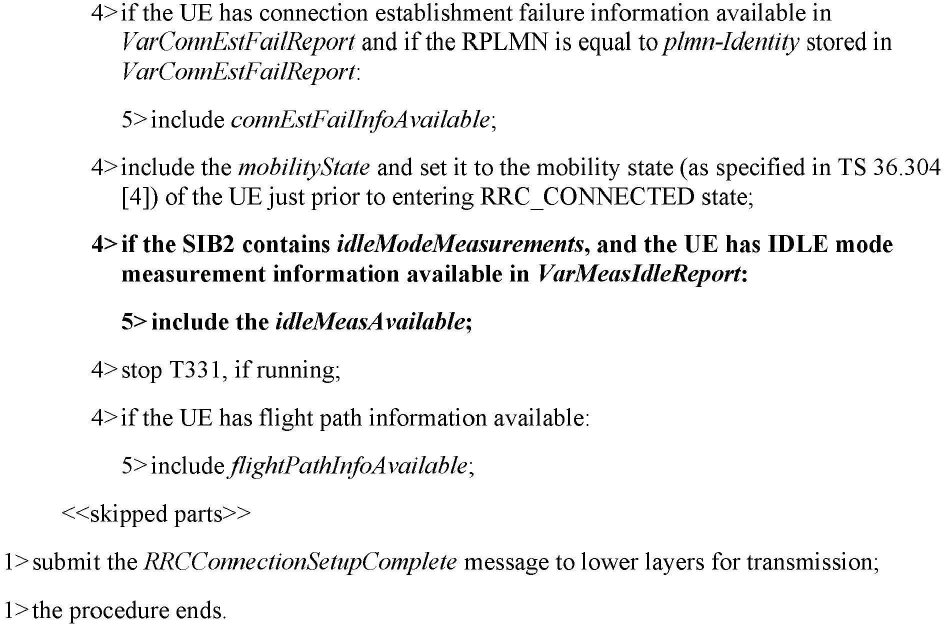

### 5.3.3.4a Reception of the RRCConnectionResume by the UE

The UE shall:

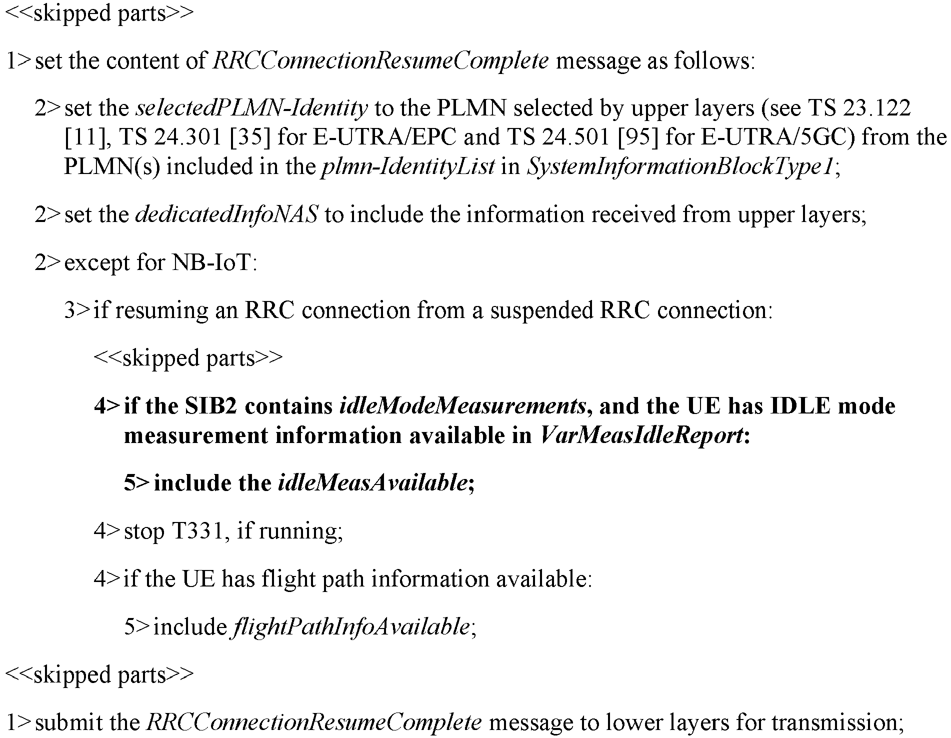

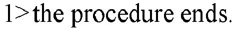

### 5.3.8.3 Reception of the RRCConnectionRelease by the UE

The UE shall:

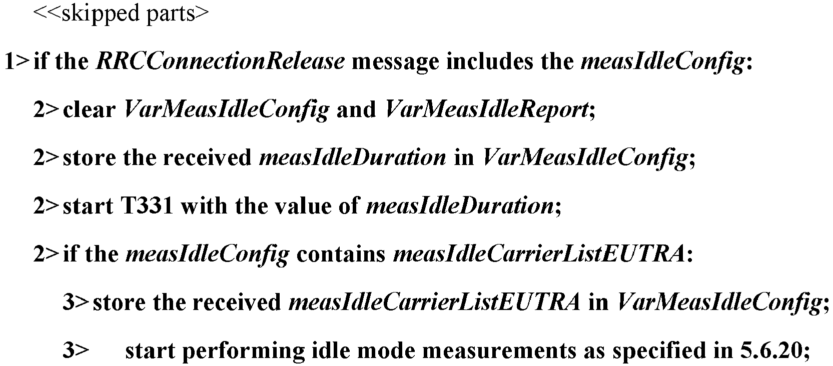

**NOTE 2: If the *measIdleConfig* does not contain *measIdleCarrierListEUTRA,* UE may receive *measIdleCarrierListEUTRA* as specified in 5.2.2.12.**

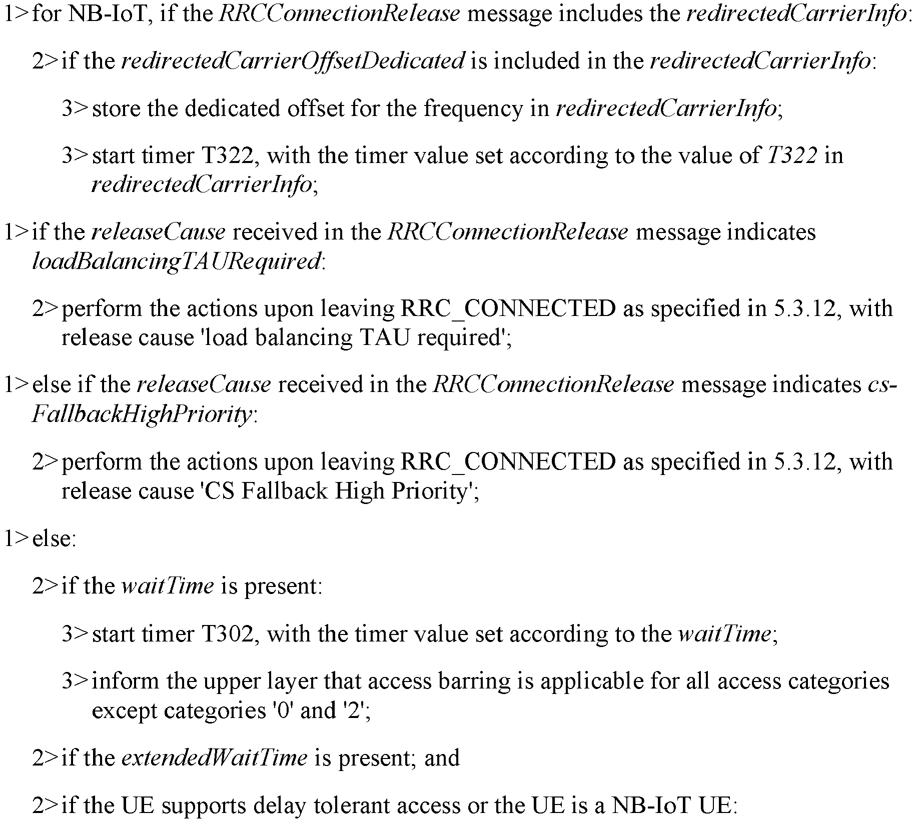

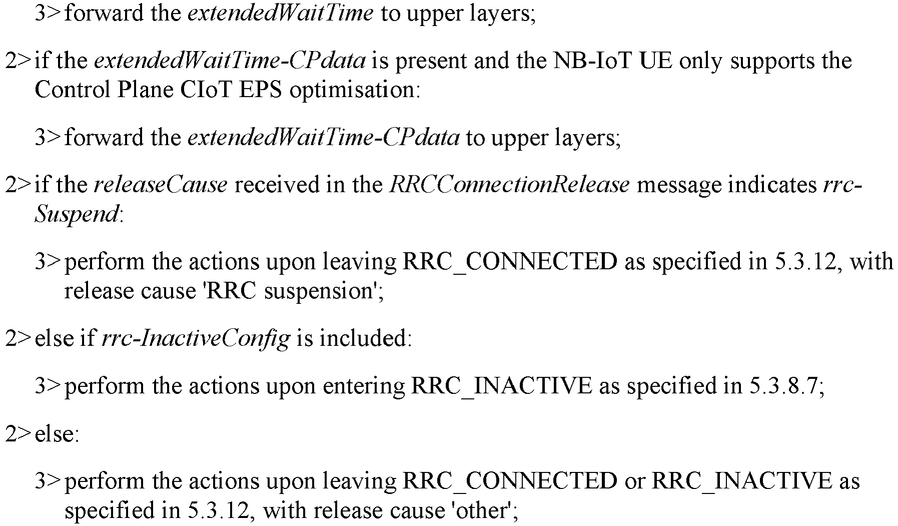

### 5.6.5.3 Reception of the UEInformationRequest message

Upon receiving the *UEInformationRequest* message, the UE shall, only after successful security activation:

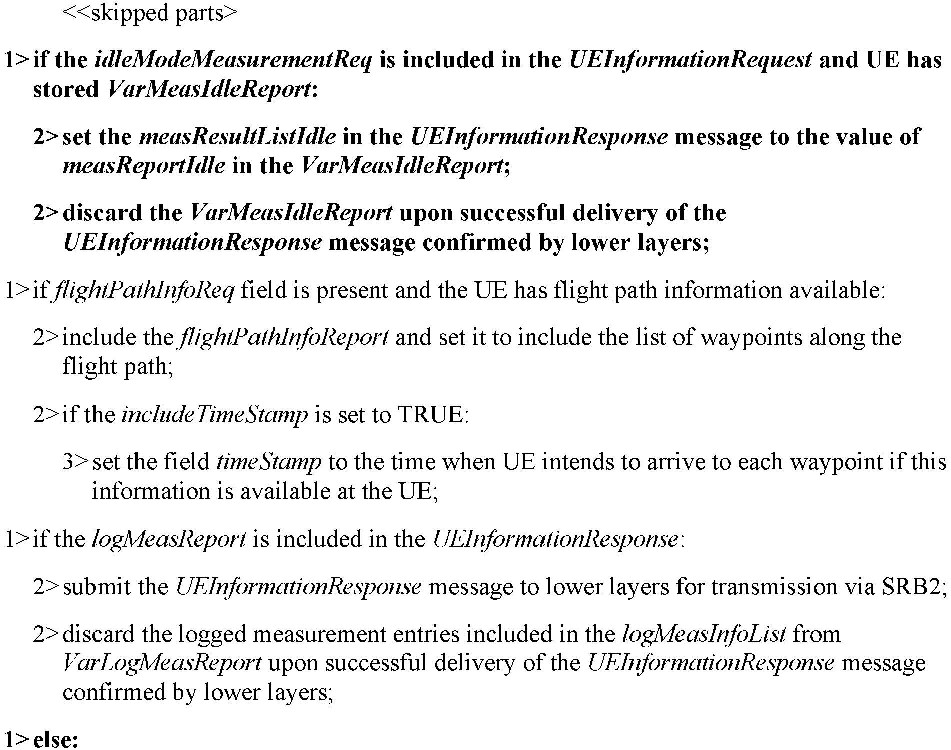

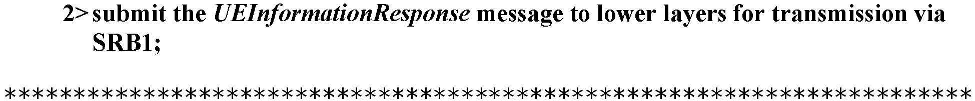

### 2.2 Current Status of Early Measurement Configurations in Release 16

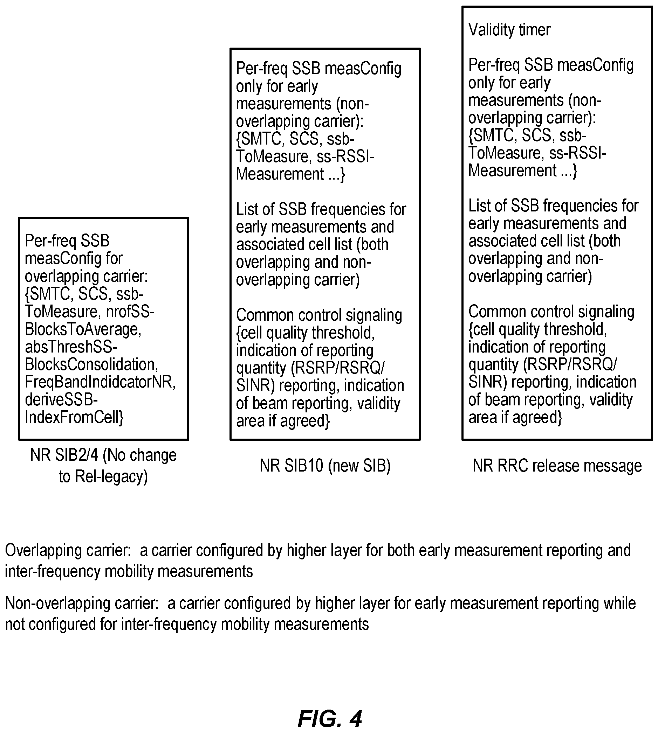

The early measurement configuration for Rel-16 is currently being discussed. After RAN2#106, an email discussion was started and the summary of that email discussion can be found at R2-1908673. Therein, it was proposed to separate measurement configurations for the frequencies that are relevant for cell re-selection from those that are not relevant for cell re-selection (i.e. those frequencies that can be used for SCells but not for PCell/PSCell). The proposed measurement configuration is to be communicated to the UE as shown in Figure 4.

For the overlapping carriers (i.e. those that are also eligible for cell re-selection), the measurement configuration is provided in the SIBs, while for the non-overlapping frequencies (those not eligible for cell re-selection), the measurement configuration is provided either in SIB (e.g. new SIB, SIB10) or in a dedicated manner to the UE in the RRCRelease message.

Thus, the New Radio (NR) RRCRelease message will contain:
- measIdleDuration, and
- optionally:
   1. a list of overlapping frequencies that the UE has to measure in idle/inactive mode,
   2. a list of non-overlapping frequencies that the UE has to be measure in idle/inactive mode, along with the measurement configurations for those frequencies.

The SIB for early measurement (e.g. SIB10) will contain:
1. a list of overlapping frequencies that the UE has to measure in idle/inactive mode, and
2. a list of non-overlapping frequencies that the UE has to be measure in idle/inactive mode, along with the measurement configurations for those frequencies.

3GPP draft document R2-1910251 of the same applicant, titled "Handling of idle/inactive measurements during inter-RAT cell reselection" discloses that a UE can be configured with an idle mode measurement configuration, for measurements on different E-UTRA carriers/cells, wherein available measurement results shall not be released at the inter-RAT cell reselection.

3GPP draft document R2-1910955, titled "Early measurements in RRC_IDLE and inter-RAT cell reselection discloses various proposals about early measurement configuration in case of inter-RAT cell reselection.

3GPP draft document R2-1911294, titled" Considerations on validity area in NR" discloses to release an idle mode measurement configuration after cell reselection in case that this cell does not belong to a predefined list of cells.

### Summary

It is an object of the present invention to provide an improved handling of mismatching measurement configurations that may occur when a wireless device performs cell re-selection. This object is achieved by the independent claims. Advantageous embodiments are described in the dependent claims and by the following description.

In one embodiment, the method further comprises, while in the dormant state and prior to performing the cell re-selection, starting the idle mode measurement duration timer and performing idle mode measurements in accordance with the first measurement configurations while the idle mode measurement duration timer is running.

In one embodiment, the method further comprises, while in the dormant state and prior to performing the cell re-selection, performing inter-frequency mobility measurements on the one or more overlapping carriers in the first set of carriers in accordance with the first measurement configurations.

In one embodiment, a particular carrier is an overlapping carrier in both the first set of carriers and the second set of carriers, the first measurement configuration for the particular carrier on the first cell is different than the second measurement configuration for the particular carrier on the second cell, and performing the one or more actions in response to the one or more mismatches between the first measurement configurations and the second measurement configurations comprises keeping the first measurement configuration for the particular carrier and ignoring the second measurement configuration for the particular carrier.

In one embodiment, a particular carrier is an overlapping carrier in both the first set of carriers and the second set of carriers, the first measurement configuration for the particular carrier on the first cell is different than the second measurement configuration for the particular carrier on the second cell, and performing the one or more actions in response to the one or more mismatches between the first measurement configurations and the second measurement configurations comprises replacing the first measurement configuration for the particular carrier with the second measurement configuration for the particular carrier and performing measurements for the particular carrier in accordance with the second measurement configuration for the particular carrier.

In one embodiment, a particular carrier is an overlapping carrier in both the first set of carriers and the second set of carriers, the first measurement configuration for the particular carrier on the first cell is different than the second measurement configuration for the particular carrier on the second cell, and performing the one or more actions in response to the one or more mismatches between the first measurement configurations and the second measurement configurations comprises stopping performing measurements, including idle mode measurements and if applicable inter-frequency mobility measurements, on the particular carrier.

In one embodiment, a particular carrier is an overlapping carrier in both the first set of carriers and the second set of carriers, the first measurement configuration for the particular carrier on the first cell is different than the second measurement configuration for the particular carrier on the second cell, and performing the one or more actions in response to the one or more mismatches between the first measurement configurations and the second measurement configurations comprises pausing performing measurements, including idle mode measurements and if applicable inter-frequency mobility measurements, on the particular carrier.

In one embodiment, for the particular carrier, the mismatch between the first measurement configuration for the particular carrier and the second measurement configuration for the particular carrier comprises a mismatch between a broadcasted measurement configuration for the particular carrier in the first cell and a broadcasted measurements configuration for the particular carrier in the second cell.

In one embodiment, a particular carrier is in the first set of carriers as an overlapping carrier but is not in the second set of carriers as an overlapping carrier, and performing the one or more actions in response to the one or more mismatches between the first measurement configurations and the second measurement configurations comprises continuing to perform idle mode measurements on the particular carrier in accordance with the first measurement configuration for the particular carrier and performing measurements for cell re-selection on the particular carrier in accordance with the second measurement configurations.

In one embodiment, a particular carrier is in the first set of carriers as an overlapping carrier but is not in the second set of carriers as an overlapping carrier, and performing the one or more actions in response to the one or more mismatches between the first measurement configurations and the second measurement configurations comprises stopping performing measurements, including both idle mode measurements and inter-frequency mobility measurements, on the particular carrier.

In one embodiment, a particular carrier is in the first set of carriers as an overlapping carrier but is not in the second set of carriers as an overlapping carrier, and performing the one or more actions in response to the one or more mismatches between the first measurement configurations and the second measurement configurations comprises pausing performing measurements, including both idle mode measurements and inter-frequency mobility measurements, on the particular carrier.

In one embodiment, a particular carrier is in the first set of carriers as a non-overlapping carrier, the particular carrier is in the second set of carriers as an overlapping carrier, and performing the one or more actions in response to the one or more mismatches between the first measurement configurations and the second measurement configurations comprises performing measurements on the particular carrier in accordance with the first measurement configuration for the particular carrier. In one embodiment, the first measurement configurations comprise dedicated measurement configurations for the particular carrier received from the first cell, and performing measurements on the particular carrier in accordance with the first measurement configuration for the particular carrier comprises performing measurements on the particular carrier in accordance with the dedicated measurement configurations for the particular carrier received from the first cell.

In one embodiment, a particular carrier is in the first set of carriers as non-overlapping carrier, the particular carrier is in the second set of carriers as an overlapping carrier, and performing the one or more actions in response to the one or more mismatches between the first measurement configurations and the second measurement configurations comprises replacing the first measurement configuration for the particular carrier with the second measurement configuration for the particular carrier and performing measurements on the particular carrier in accordance with the second measurement configuration for the particular carrier. In one embodiment, the first measurement configurations comprise dedicated measurement configurations for the particular carrier received from the first cell, the second measurement configurations comprise broadcasted measurement configurations for the particular carrier received from the second cell, and replacing the first measurement configuration for the particular carrier with the second measurement configuration for the particular carrier comprises replacing the dedicated measurement configurations for the particular carrier received from the first cell with the broadcasted measurement configurations for the particular carrier received from the second cell.

In one embodiment, a particular carrier is in the first set of carriers as a non-overlapping carrier, the particular carrier is in the second set of carriers as an overlapping carrier, and performing the one or more actions in response to the one or more mismatches between the first measurement configurations and the second measurement configurations comprises performing idle mode measurements on the particular carrier in accordance with the first measurement configuration for the particular carrier and performing inter-frequency mobility measurements on the particular carrier in accordance with the second measurement configuration for the particular carrier. In one embodiment, the first measurement configurations comprise dedicated measurement configurations for the particular carrier received from the first cell, the second measurement configurations comprise broadcasted measurement configurations for the particular carrier received from the second cell, performing idle mode measurements on the particular carrier in accordance with the first measurement configuration for the particular carrier comprises performing idle mode measurements on the particular carrier in accordance with the dedicated measurement configurations for the particular carrier received from the first cell, and performing inter-frequency mobility measurements on the particular carrier in accordance with the second measurement configuration for the particular carrier comprises performing inter-frequency mobility measurements on the particular carrier in accordance with the broadcasted measurement configurations for the particular carrier received from the source cell.

In one embodiment, a particular carrier is in the first set of carriers as a non-overlapping carrier, the particular carrier is in the second set of carriers as an overlapping carrier, and performing the one or more actions in response to the one or more mismatches between the first measurement configurations and the second measurement configurations comprises stopping performing idle mode measurements on the particular carrier.

In one embodiment, a particular carrier is in the first set of carriers as a non-overlapping carrier, the particular carrier is in the second set of carriers as an overlapping carrier, and performing the one or more actions in response to the one or more mismatches between the first measurement configurations and the second measurement configurations comprises pausing (612-3E1) performing measurements, including both idle mode measurements and inter-frequency mobility measurements, on the particular carrier.

Corresponding embodiments of a wireless device are also disclosed.

### Brief Description of the Drawings

The accompanying drawing figures incorporated in and forming a part of this specification illustrate several aspects of the disclosure, and together with the description serve to explain the principles of the disclosure.
Figure 1 illustrates cell aggregation for Carrier Aggregation (CA) at the Medium Access Control (MAC) level;
Figure 2 illustrates transitions between activated, deactivated, dormant cell states;
Figure 3 illustrates a process in which the network decides to setup CA or Dual-Connectivity (DC) for a User Equipment (UE);
Figure 4 illustrates how a measurement is to be communicated to a UE;
Figure 5 illustrates one example of a cellular communications system in which embodiments of the present disclosure may be implemented;
Figure 6 illustrates a procedure for handling mismatches between measurements configurations, including early measurement configurations, of a source cell and a target cell during cell re-selection in accordance with embodiments of the present disclosure;
Figures 7 through 9 are schematic block diagrams of example embodiments of a radio access node, such as a base station, in accordance with the present disclosure;
Figures 10 and 11 are schematic block diagrams of example embodiments of a wireless device, such as a UE, in accordance with the present disclosure; and
Figures 12 through 23 illustrate various embodiments of step 612 of Figure 6 in accordance with the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Radio Node:** As used herein, a "radio node" is either a radio access node or a wireless device.

**Radio Access Node:** As used herein, a "radio access node" or "radio network node" is any node in a radio access network of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), and a relay node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Function (AMF), a UPF, a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

Note that the terms "early measurement" and "idle mode measurement" are used interchangeably herein. Likewise, the terms "early measurement configuration" and "idle mode measurement configuration" are used interchangeably herein.

There currently exist certain challenge(s) with respect to idle mode measurement configurations. Assume that a UE is sent to IDLE/INACTIVE mode and configured with a dedicated early measurement configuration like this:
- List of frequencies to measure:
   - Overlapping (f1, f2, f3);
   - Non-overlapping (f4, f5, f6) + the measurement configuration for these frequencies; and
   - MeasIdleDuration.

Further assume that the cell where the UE goes to IDLE/INACTIVE broadcasts the measurement configuration for f1, f2, f3.

The UE sets timer T331 to the value measIdleDuration, starts timer T331, and starts performing idle mode measurements. For the sake of brevity, assume that the UE is capable of performing DC/CA between the serving cell frequency and all configured frequencies (f1-f6). Thus, the UE starts performing idle mode measurements on all the frequencies f1-f6.

Assume that the UE performs cell re-selection to another cell that is broadcasting the following information:
- cell re-selection candidate frequencies and their measurement configurations:
   - f1, f2^{∗}, f4.

That is:
a) the measurement configurations in this cell for f2 are different from the measurement configuration for f2 in the cell where the UE was released (e.g. different Synchronization Signal Block (SSB) based Measurement Timing Configuration (SMTC) values, if the network was not fully synchronized);
b) the frequency that was not eligible for cell re-selection in the cell where the UE was released (f4) is now an eligible cell for cell re-selection in the new cell; and
c) the frequency that was eligible for cell re-selection in the cell where the UE was released (f3) is now not eligible cell for cell re-selection in the new cell.

Currently, there is no mechanism for handling such mismatches between idle mode measurement configurations in the source and target cells during cell re-selection.

Certain aspects of the present disclosure and their embodiments may provide solutions to the aforementioned or other challenges. Embodiments of the present disclosure provide mechanisms to handle idle mode measurement configuration mismatches when the UE performs cell re-selection, while T331 is still running. The mismatches could be between dedicated measurement configuration in the source cell and broadcasted configuration in the target cell or/and between the broadcasted information in the source and target cells.

The proposed mechanisms will let the UE determine, e.g.:
a) whether to prioritize the broadcasted information in the source cell or the broadcasted information in the source cell,
b) whether to prioritize the dedicated information received in the source or the broadcasted information in the target cell, and/or
c) whether to stop or pause measurements whenever there are discrepancies between the configurations (either dedicated or broadcasted) in the source cell and the broadcasted information in the target cell.

Certain embodiments may provide one or more of the following technical advantage(s). For example, embodiments of the present disclosure enable the UE to handle idle mode measurement configuration provided for both idle mode measurements for CA/DC and for cell re-selection, after the UE has performed a cell re-selection to a cell with a different configuration.

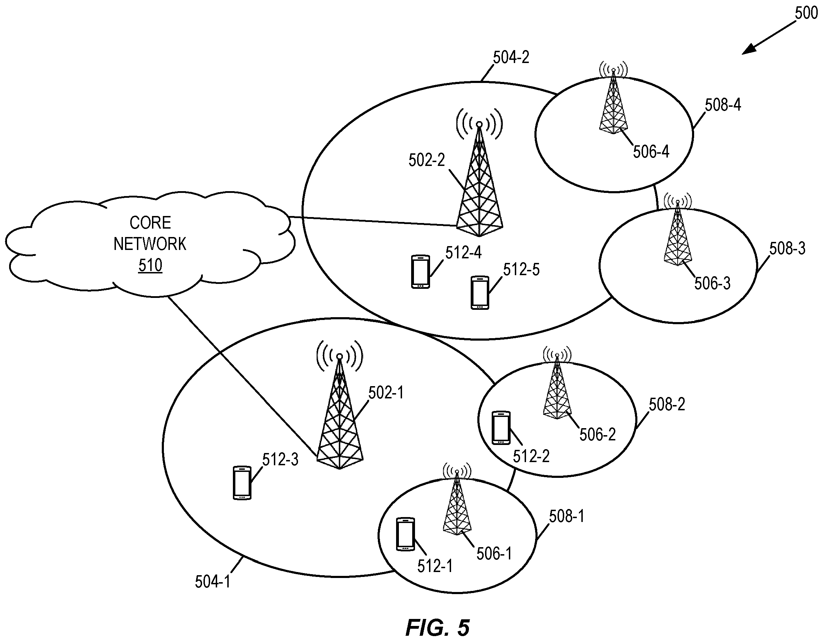

In this regard, Figure 5 illustrates one example of a cellular communications system 500 in which embodiments of the present disclosure may be implemented. In the embodiments described herein, the cellular communications system 500 is a 5G system (5GS) including a NR RAN or LTE RAN (i.e., E-UTRA RAN) or an Evolved Packet System (EPS) including a LTE RAN. In this example, the RAN includes base stations 502-1 and 502-2, which in LTE are referred to as eNBs (when connected to EPC) and in 5G NR are referred to as gNBs or NG-RAN nodes (e.g., LTE RAN nodes connected to 5GC, which are referred to as ng-eNBs), controlling corresponding (macro) cells 504-1 and 504-2. The base stations 502-1 and 502-2 are generally referred to herein collectively as base stations 502 and individually as base station 502. Likewise, the (macro) cells 504-1 and 504-2 are generally referred to herein collectively as (macro) cells 504 and individually as (macro) cell 504. The RAN may also include a number of low power nodes 506-1 through 506-4 controlling corresponding small cells 508-1 through 508-4. The low power nodes 506-1 through 506-4 can be small base stations (such as pico or femto base stations) or Remote Radio Heads (RRHs), or the like. Notably, while not illustrated, one or more of the small cells 508-1 through 508-4 may alternatively be provided by the base stations 502. The low power nodes 506-1 through 506-4 are generally referred to herein collectively as low power nodes 506 and individually as low power node 506. Likewise, the small cells 508-1 through 508-4 are generally referred to herein collectively as small cells 508 and individually as small cell 508. The cellular communications system 500 also includes a core network 510. The base stations 502 (and optionally the low power nodes 506) are connected to the core network 510.

The base stations 502 and the low power nodes 506 provide service to wireless devices 512-1 through 512-5 in the corresponding cells 504 and 508. The wireless devices 512-1 through 512-5 are generally referred to herein collectively as wireless devices 512 and individually as wireless device 512. The wireless devices 512 are also sometimes referred to herein as UEs.

Now, a discussion will be provided regarding some specific example embodiments. Note that the embodiments disclosed herein are equally applicable for both LTE and NR. However, most of the description below refers to LTE for illustrative purposes. Also note that the names of the specific messages (e.g., RRC messages) referred to below for LTE (TS 36.331) are not necessarily the same as the names of the corresponding messages (e.g., RRC messages) in NR (TS 38.331). The names of the messages in NR have oftentimes been shortened compared to the corresponding message in LTE, e.g., by removing the word "Connection". For example, LTE uses the name "RRCConnectionRelease" whereas NR uses the name "RRCRelease"; LTE uses the name "RRCConnectionSetup" whereas NR uses the name "RRCSetup"; LTE uses the name "RRCConnectionResumeRequest" whereas NR uses the name "RRCResumeRequest" or "RRCResumeRequest1"; etc. As such, it should be noted that the detailed examples given herein for specific RRC messages can also be implemented in the corresponding RRC messages in NR.

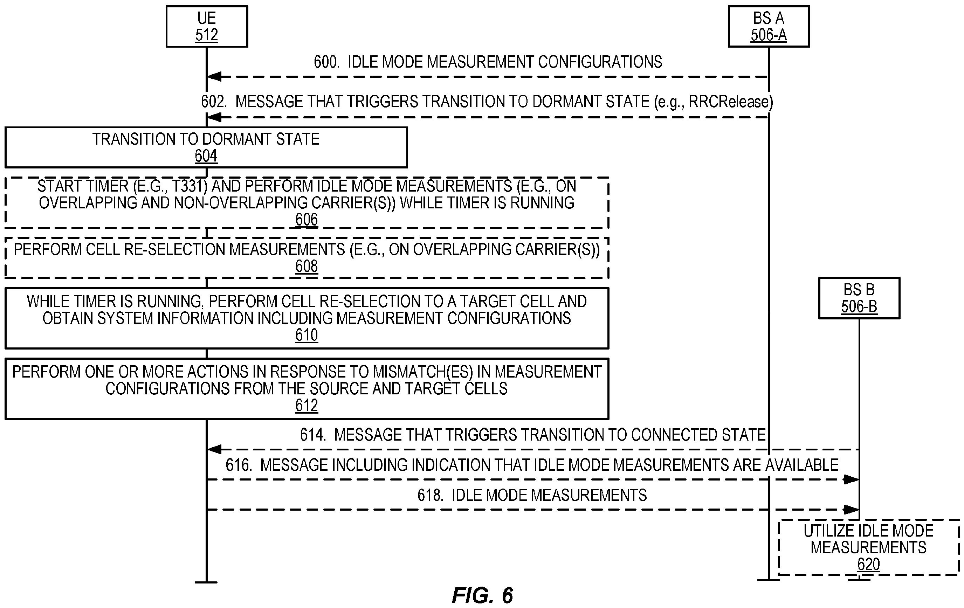

Embodiments of methods performed at a wireless device (e.g., a wireless device or UE 512) for handling idle measurements performed for early reporting while the UE is in a dormant state (IDLE or INACTIVE mode in LTE/NR, IDLE with suspended mode in LTE) are disclosed. In this regard, Figure 6 illustrates the operation of a wireless device, which in this example is a UE 512, and one or more network nodes, which in this example are a base station 506-A associated with a source cell for a cell reselection and a base station 506-B associated with a target cell for the cell reselection, in accordance with some embodiments of the present disclosure. Optional steps are represented with dashed lines or dashed boxes.

As illustrated, the base station 506-A optionally provides measurement configurations to the UE 512 (step 600). This may be done, e.g., via broadcast (e.g., in system information). Examples of measurement configurations are provided above and, as such, are not repeated here. The measurement configurations (also referred to herein as broadcast measurement configurations) include measurement configurations (e.g., idle mode measurement configurations and cell re-selection measurement configurations) for one or more overlapping carriers and/or measurement configurations (e.g., idle mode measurement configurations) for one or more non-overlapping carriers. As discussed above, an "overlapping carrier" is a carrier configured for both early measurement report (i.e., idle mode measurements) and inter-frequency mobility measurements (e.g., cell re-selection measurements). As would be understood by one of skill in the art, an "inter-frequency mobility measurement" is an inter-frequency measurement for mobility purposes, one example of which is a cell selection/re-selection measurement such as, e.g., an RSRP measurement or a RSRQ measurement. Conversely, a "non-overlapping carrier" is a carrier configured for early measurement reporting while not configured for inter-frequency mobility measurements.

Optionally, in some embodiments, the base station 506 sends a message (e.g., RRCRelease message) to the UE 512 that triggers transition to a dormant state (e.g., IDLE or INACTIVE mode in LTE/NR, IDLE with suspended mode in LTE) (step 602). Note that, in some embodiments, this message may include measurement configurations (e.g., idle mode measurement configurations), as discussed above. These measurement configurations (also referred to herein as dedicated measurement configurations) include measurement configurations (e.g., idle mode measurement configurations and cell re-selection measurement configurations) for one or more overlapping carriers and/or measurement configurations (e.g., idle mode measurement configurations) for one or more non-overlapping carriers.

The measurement configurations obtained by the UE 512 in step 600 and/or step 602 are sometimes referred to herein as measurement configurations for a set of carriers, where this set of carriers includes one or more non-overlapping carriers and/or one or more overlapping carriers.

The UE 512 transitions from a connected state to a dormant state (e.g., upon receiving the message of step 602) (step 604). Upon entering the dormant state, the UE 512 starts an idle mode measurement duration timer, which in this example is the T331 timer which is configured with the IdleMeasDuration value from the idle mode measurement configurations, and performs idle mode measurements until the measurement duration timer has expired or measurements are otherwise stopped (step 606). Note that while shown as a single block, it is to be understood that the performance of the idle mode measurements is a continuing process that continues until the idle mode measurement duration timer has expired or the measurements are otherwise stopped.

In this example, (e.g., while the timer is running and the UE 512 is performing idle mode measurements) the UE 512 performs cell re-selection measurements (e.g., on the overlapping carrier(s) in accordance with the respective measurement configuration(s)) (step 608) and performs cell re-selection to a target cell, which in this example is served by base station 506-B (step 610). In association with the cell re-selection to the target cell, the UE 512 obtains system information for the target cell, which includes measurement configurations. The measurement configurations (also referred to herein as broadcast measurement configurations) include measurement configurations (e.g., idle mode measurement configurations and cell re-selection measurement configurations) for one or more overlapping carriers and/or measurement configurations (e.g., idle mode measurement configurations) for one or more non-overlapping carriers. The measurement configurations obtained by the UE 512 from the target cell are sometimes referred to herein as measurement configurations for a set of carriers, where this set of carriers includes one or more non-overlapping carriers and/or one or more overlapping carriers.

The UE 512 performs one or more actions in response to one or more mismatches between the measurement configurations from the source cell and those from the target cell (step 612). Various embodiments of the one or more actions performed by the UE 512 in response to mismatch(es) between the measurement configurations obtained from the source cell and those obtained from the target cell are described below. In general, these actions handle or address how the UE 512 is to perform measurements on particular carrier(s) for which there is (are) a measurement mismatch(es). In other words, the UE 512 determines that there are one or more mismatches between the measurement configurations obtained from the source cell for the respective set of carriers for those measurement configurations and the measurement configurations obtained from the target cell for the respective set of carriers to those measurement configurations. Below, various actions that may be performed by the UE 512 in response to the detected mismatch(es) are described where the action(s) performed may depend on the type of mismatch.

Optionally, the UE 512 subsequently receives a message (e.g., an RRC connection setup or RRC Connection Resume) from the base station 506-B serving the target cell (step 614). Optionally, the UE 512 sends, in this example, a message that includes an indication that idle mode measurements are available to the base station 506 (step 616). Optionally, the UE 512 sends the idle mode measurements to the base station 506, e.g., in a respective report (step 618). Optionally, the base station 506 utilizes the idle mode measurements (step 620).

Now a description of various embodiments of how the UE 512 performs one or more actions to handle any mismatch between the idle mode measurement configurations for the source cell and those of the target cell is provided.

The UE 512 receives an RRCRelease (or RRCConnectionRelease) message at a source cell (e.g., in step 602). This message contains a dedicated idle mode measurement configuration for overlapping (applicable to both cell re-selection and idle mode measurement) and/or non-overlapping (applicable only to idle mode measurement) frequencies to perform measurements on. For the example used in the following description, the UE 512 receives a dedicated idle mode measurement configuration in the RRCRelease message indicating:
- overlapping frequencies: (f1, f2, f3),
- non-overlapping frequencies (f4, f5, f6), and
- measurement configuration for non-overlapping frequencies (f4, f5, f6).

The UE 512 obtains measurement configurations for the overlapping frequencies (f1, f2, f3) from the broadcasted information in the source cell (e.g., in step 600).

The UE 512 starts the T331 timer based on the received measIdleDuration in the RRCRelease message and starts the idle mode measurements on the indicated frequencies for early measurements in the RRCRelease (e.g., in step 606), based on the dedicated configurations for cells that are not candidates for cell-reselection included in the RRCRelease and broadcasted configuration for cells that are candidates for cell re-selection.

The UE 512 performs cell re-selection to a target cell, e.g., based on legacy cell re-selection criteria (e.g., in step 610).

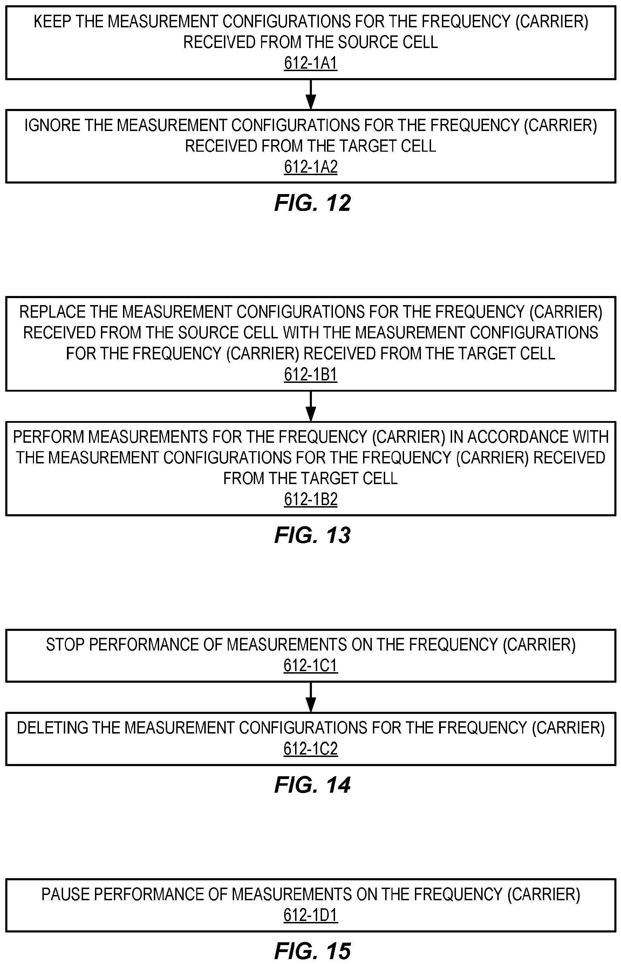

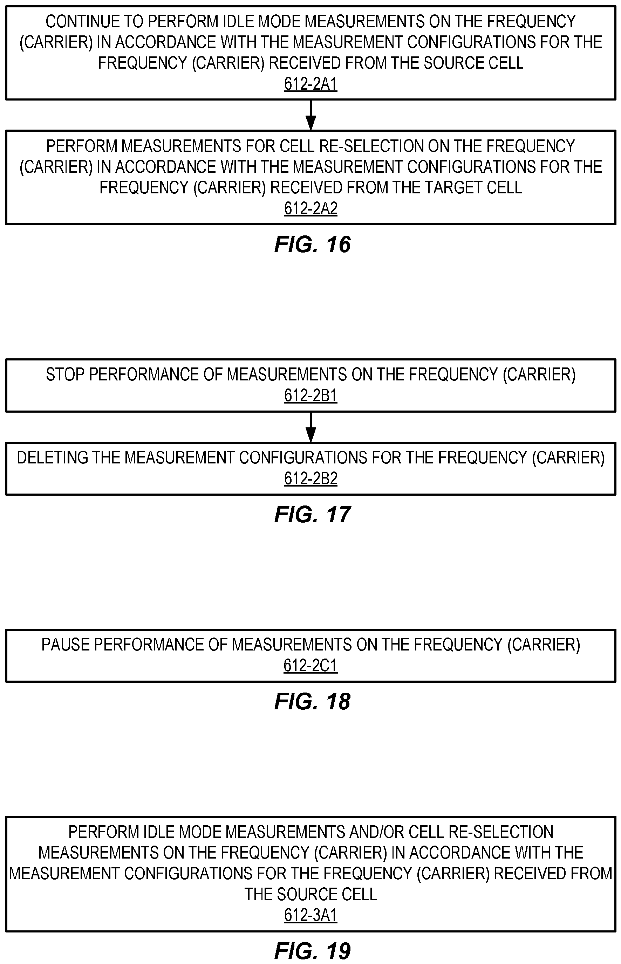

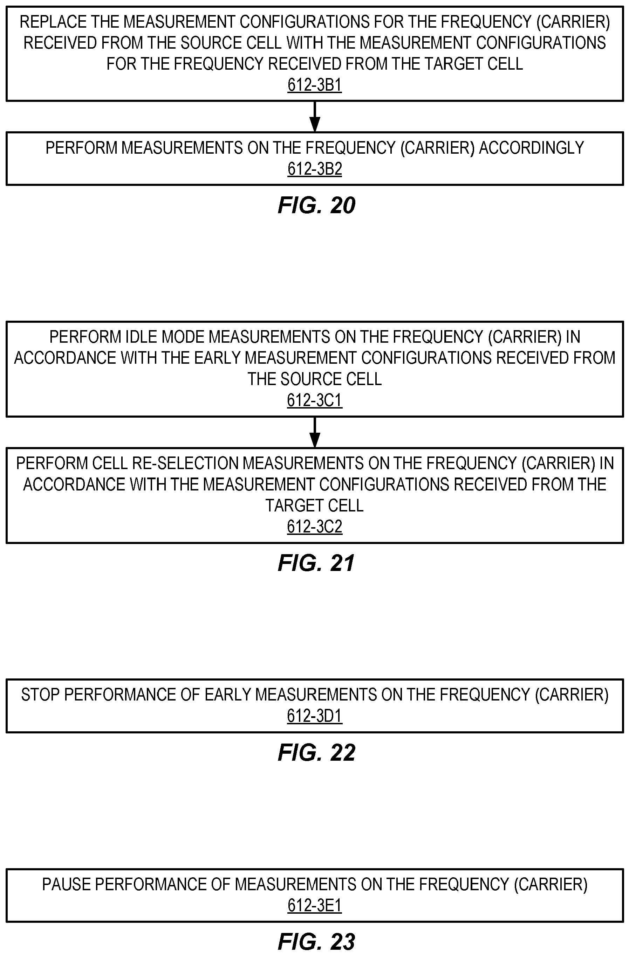

In some embodiments, the one or more actions performed by the UE 512 in response to a mismatch(es) in the measurement configurations between the source and target cells (e.g., in step 612) includes any one or more of the following actions:
- For each frequency (also referred to herein as a carrier) that is a candidate for cell reselection (i.e., is an overlapping carrier) in both source cell and target cell and for which the configuration that was broadcasted in the source cell is different from the configuration broadcasted in the target cell, where the UE has received indication to perform early measurement on the frequencies:
   a) the UE keeps using the old broadcasted measurement configurations from the source cell for both early measurements and cell re-selection measurements for this frequency. The UE thus ignores the broadcasted measurement configurations for this frequency received from the target cell. Thus, in one embodiment as illustrated in Figure 12, step 612 of Figure 6 includes keeping the measurement configurations for the frequency (carrier) received from the source cell (step 612-1A1) and ignoring the measurement configurations for the frequency (carrier) received from the target cell (step 612-1A2).
      ∘ For instance, if the source cell provided broadcasted measurement configurations for frequencies (f1, f2, f3), but the target cell provides differing measurement configurations for e.g. f2 (but the same configurations for f1 and f3 (i.e. [f1,f2^{∗},f3]), the UE continues to use [f1,f2,f3] and ignore f2^{∗}.
   b) The UE replaces the broadcasted measurement configuration from the source cell with the broadcasted measurement configuration in the target cell and performs measurements accordingly. Thus, in one embodiment as illustrated in Figure 13, step 612 of Figure 6 includes replacing the (broadcasted) measurement configurations for the frequency (carrier) received from the source cell with the (broadcasted) measurement configurations for the frequency (carrier) received from the target cell (step 612-1B1), and performing measurements for the frequency (carrier) in accordance with the (broadcasted) measurement configurations for the frequency (carrier) received from the target cell (step 612-1B2).
      ∘ For instance, if the source cell provided broadcasted measurement configurations for frequencies (f1, f2, f3), but the target cell provides differing measurement configurations for e.g. f2 (but the same configurations for f1 and f3 (i.e. [f1,f2^{∗},f3]), the UE starts using [f1,f2^{∗},f3] and ignore delete the old f2.
   c) The UE stops measuring that frequency and deletes the measurement configuration for the frequency. Thus, in one embodiment as illustrated in Figure 14, step 612 of Figure 6 includes stopping performance of measurements on the frequency (carrier) (step 612-1C1) and deleting the measurement configurations for the frequency (carrier) (step 612-1C2).
      ∘ For instance, if the source cell provided broadcasted measurement configurations for frequencies (f1, f2, f3), but the target cell provides differing measurement configurations for e.g. f2 (but the same configurations for f1 and f3 (i.e. [f1,f2^{∗},f3]), the UE stops measuring on f2 for both early measurement and cell re-selection, but continue to measure on f1 and f3. The UE would also delete the configurations for f2.
   d) The UE pauses measurements on that frequency while camping in the target cell. Thus, in one embodiment as illustrated in Figure 15, step 612 of Figure 6 includes pausing performance of measurements on the frequency (carrier) (step 612-1D1). If the UE re-selects back to the source cell or to another cell where the configuration for that frequency is the same as the source cell, the UE continues measuring that frequency.
      ∘ For instance, if the source cell provided broadcasted measurement configurations for frequencies (f1, f2, f3), but the target cell provides differing measurement configurations for e.g. f2 (but the same configurations for f1 and f3 (i.e. [f1,f2^{∗},f3]), the UE stops measuring on f2 for both early measurement and cell re-selection, but continues to measure on f1 and f3. However, the UE keeps the measurement configurations for f2, and if the UE returns to the source cell, the UE resumes the measurements with the stored configurations.
- For each frequency that was a candidate for cell reselection in the source cell but not in the target cell, where the UE has received indication to perform early measurements on from the source cell:
   a) The UE keeps using the old broadcasted measurement configuration from the source cell to perform the early measurements and uses the broadcasted configurations from the target for cell re-selection. Thus, in one embodiment as illustrated in Figure 16, step 612 of Figure 6 includes continuing to perform idle mode measurements on the frequency (carrier) in accordance with the measurement configurations for the frequency (carrier) received from the source cell (step 612-2A1) and performing measurements for cell re-selection on the frequency (carrier) in accordance with the measurement configurations for the frequency (carrier) received from the target cell (step 612-2A2).
      ∘ For instance, if the source cell provided broadcasted overlapping measurement configurations for frequencies (f1, f2, f3) and dedicated non-overlapping measurement configurations for frequencies (f4,f5,f6), but the target cell provides measurement configurations only for f1 and f3, the UE continues to use [f1,f2,f3,f4,f5,f6] for early measurements, but would only perform cell re-selection on (f1, f2).
   b) The UE stops measuring that frequency (i.e. neither cell re-selection nor early measurements). Thus, in one embodiment as illustrated in Figure 17, step 612 of Figure 6 includes stopping performance of measurements on the frequency (carrier) (step 612-2B1) and deleting (releasing) the measurement configurations for the frequency (carrier) (step 612-2B2).
      ∘ For instance, if the source cell provided broadcasted overlapping measurement configurations for frequencies (f1, f2, f3) and dedicated non-overlapping measurement configurations for frequencies (f4,f5,f6), but the target cell provides measurement configurations only for f1 and f3, the UE continues to use [f1,f3,f4,f5,f6] for early measurements, but would only perform cell re-selection on (f1, f3) and the UE would release the measurement configurations for f2.
   c) The UE pauses measurements on that frequency while camping in the target cell. Thus, in one embodiment as illustrated in Figure 18, step 612 of Figure 6 includes pausing performance of measurements on the frequency (carrier) (step 612-2C1). If the UE re-selects back to the source cell or to another cell where the frequency is also eligible for cell re-selection, the UE will continue measuring that frequency.
      ∘ For instance, if the source cell provided broadcasted overlapping measurement configurations for frequencies (f1, f2, f3) and dedicated non-overlapping measurement configurations for frequencies (f4,f5,f6), but the target cell provides measurement configurations only for f1 and f3, the UE continues to use [f1,f3,f4,f5,f6] for early measurements, but would only perform cell re-selection on (f1, f3), and the UE would keep the measurement configurations for f2 so that if the UE returns to the source cell it could continue early measurements using those configurations.
- For each frequency that was not a candidate for cell reselection in the source cell but it is in the target cell (i.e., for each frequency that is a non-overlapping carrier for the source cell but is an overlapping carrier for the target cell) for which the UE received dedicated early measurement configurations in RRCRelease message:
   a) The UE keeps using the old dedicated configuration received with RRCRelease in the source cell to perform early measurements and/or for cell-reselection. Thus, in one embodiment as illustrated in Figure 19, step 612 of Figure 6 includes performing idle mode measurements and/or cell re-selection measurements on the frequency (carrier) in accordance with the (dedicated) measurement configurations for the frequency (carrier) received from the source cell (step 612-3A1).
      ∘ For instance, if the source cell provided broadcasted overlapping measurement configurations for frequencies (f1, f2, f3) and dedicated non-overlapping measurement configurations for frequencies (f4,f5,f6), but the target cell provides broadcasted measurement configurations also for f4*, the UE would continue to use [f1,f2,f3,f4,f5,f6] for early measurements, and would use the old configurations for cell re-selection (i.e. f1,f2,f3,f4) where f4 was received dedicated in the source cell.
   b) The UE replaces the old dedicated configuration from the source cell with the broadcasted configuration in the target cell and performs measurements accordingly. Thus, in one embodiment as illustrated in Figure 20, step 612 of Figure 6 includes replacing the (dedicated) measurement configurations for the frequency (carrier) received from the source cell with the (broadcasted) measurement configurations for the frequency (carrier) received from the target cell (step 612-3B1) and performing measurements on the frequency (carrier) accordingly (step 612-3B2).
      ∘ For instance, if the source cell provided broadcasted overlapping measurement configurations for frequencies (f1, f2, f3) and dedicated non-overlapping measurement configurations for frequencies (f4,f5,f6), but the target cell provides broadcasted measurement configurations also for f4^{∗}, the UE uses [f1,f2,f3,f4^{∗},f5,f6] for early measurements, and uses the new configurations for cell re-selection (i.e. f1,f2,f3, f4^{∗}) where f4* was received broadcasted in the target cell.
   c) The UE performs idle mode measurements according to the dedicated early measurement configurations received in the source cell, and performs cell re-selection measurements according to the broadcasted configurations in the target cell. Thus, in one embodiment as shown in Figure 21, step 612 of Figure 6 includes performing idle mode measurements on the frequency (carrier) in accordance with the (dedicated) early measurement configurations received from the source cell (step 612-3C1) and performing cell re-selection measurements on the frequency (carrier) in accordance with the (broadcasted) measurement configurations received from the target cell (step 612-3C2).
      ∘ For instance, if the source cell provided broadcasted overlapping measurement configurations for frequencies (f1, f2, f3) and dedicated non-overlapping measurement configurations for frequencies (f4,f5,f6), but the target cell provides measurement configurations also for f4*, the UE continues to use [f1,f2,f3,f4,f5,f6] for early measurements, and uses the new configurations for cell re-selection (i.e. f1,f2,f3,f4^{∗}) where f4^{∗} was received broadcasted in the target cell.
   d) The UE stops measuring that frequency for early measurements. Thus, in one embodiment as shown in Figure 22, step 612 of Figure 6 includes stopping performance of early (i.e., idle mode) measurements on the frequency (carrier) (step 612-3D1).
      ∘ For instance, if the source cell provided broadcasted overlapping measurement configurations for frequencies (f1,f2, f3) and dedicated non-overlapping measurement configurations for frequencies (f4,f5,f6), but the target cell provides measurement configurations also for f4*, the UE continues to use [f1,f2,f3,f5,f6] but stop measuring on f4 for early measurements, but uses the new configurations for cell re-selection (i.e. use f1,f2,f3,f4^{∗}).
   e) The UE pauses measurements on that frequency while camping in the target cell. Thus, in one embodiment as illustrated in Figure 23, step 612 of Figure 6 includes pausing performance of measurements on the frequency (carrier) (step 612-3E1). If the UE re-selects back to the source cell or to another cell where that frequency is not eligible for cell re-selection (i.e. no meas. config about that frequency in the SIBs), the UE continues measuring that frequency.
      ∘ For instance, if the source cell provided broadcasted overlapping measurement configurations for frequencies (f1,f2, f3) and dedicated non-overlapping measurement configurations for frequencies (f4,f5,f6), but the target cell provides measurement configurations also for f4*, the UE continues to use [f1,f2,f3,f5,f6] but stop measuring on f4 for early measurements, but uses the new configurations for cell re-selection (i.e. use f1,f2,f3,f4^{∗}). If the UE reselects back to the source cell, it will continue to measure according to f4.

In summary, Figure 6 may be regarded to describe a method performed by a UE or wireless device for idle mode measurements while the UE is in an idle or inactive state, the method comprising the following steps:
obtaining on a first cell, first measurement configurations for a first set of carriers comprising:
one or more overlapping carriers, wherein an overlapping carrier is a carrier that is configured for both idle mode measurements and inter-frequency mobility measurements,
one or more non-overlapping carriers, wherein a non-overlapping carrier is a carrier that is configured for idle mode measurements but not for inter-frequency mobility measurements, or both one or more overlapping carriers and one or more non-overlapping carriers;
transitioning to a dormant state; and
while in the dormant state:
   performing a cell re-selection from the first cell to a second cell while an idle mode measurement duration timer is running;
   obtaining, from the second cell, second measurement configurations for a second set of carriers comprising one or more overlapping carriers, one or more non-overlapping carriers, or both one or more overlapping carriers and one or more non-overlapping carriers overlapping with each one carrier of the first set of carriers; and/or one or more non-overlapping carriers each not overlapping to any of the carriers of the first set, and
   performing one or more actions in response to one or more mismatches between the first measurement configurations and the second measurement configurations.

It is to be noted that an overlapping carrier is a carrier the is comprised both in the first set and the second set while a non-overlapping carrier is only comprised in one of the sets.

As discussed above, overlapping carriers may be applicable to both cell re-selection and idle mode measurement, and non-overlapping carriers are applicable only to ide mode measurement.

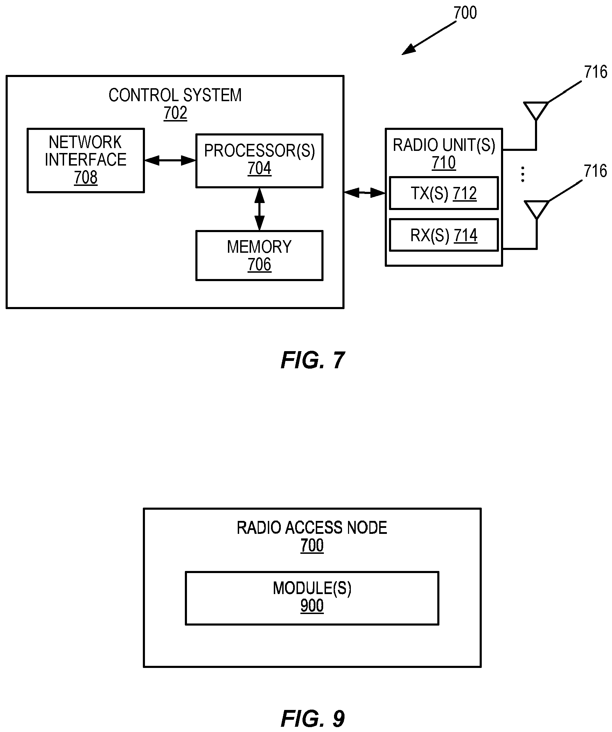

Figure 7 is a schematic block diagram of a radio access node 700 according to some embodiments of the present disclosure. The radio access node 700 may be, for example, a base station 502 or 506. As illustrated, the radio access node 700 includes a control system 702 that includes one or more processors 704 (e.g., Central Processing Units (CPUs), Application Specific Integrated Circuits (ASICs), Field Programmable Gate Arrays (FPGAs), and/or the like), memory 706, and a network interface 708. The one or more processors 704 are also referred to herein as processing circuitry. In addition, the radio access node 700 includes one or more radio units 710 that each includes one or more transmitters 712 and one or more receivers 714 coupled to one or more antennas 716. The radio units 710 may be referred to or be part of radio interface circuitry. In some embodiments, the radio unit(s) 710 is external to the control system 702 and connected to the control system 702 via, e.g., a wired connection (e.g., an optical cable). However, in some other embodiments, the radio unit(s) 710 and potentially the antenna(s) 716 are integrated together with the control system 702. The one or more processors 704 operate to provide one or more functions of a radio access node 700 as described herein (e.g., one or more functions of base station 506-A or 506-B described above with respect to Figure 6). In some embodiments, the function(s) are implemented in software that is stored, e.g., in the memory 706 and executed by the one or more processors 704.

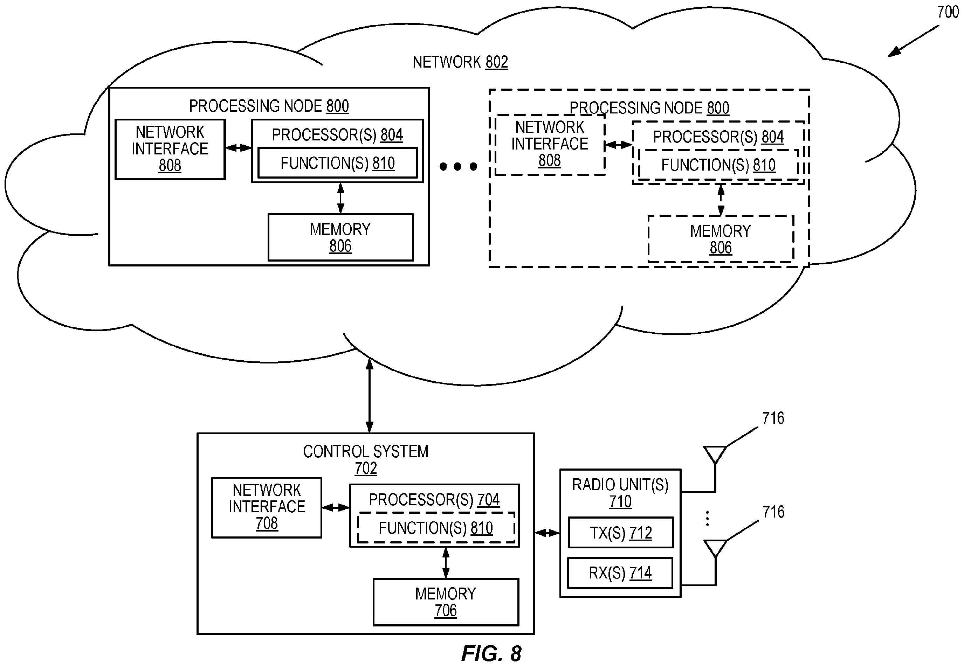

Figure 8 is a schematic block diagram that illustrates a virtualized embodiment of the radio access node 700 according to some embodiments of the present disclosure. This discussion is equally applicable to other types of network nodes. Further, other types of network nodes may have similar virtualized architectures.

As used herein, a "virtualized" radio access node is an implementation of the radio access node 700 in which at least a portion of the functionality of the radio access node 700 is implemented as a virtual component(s) (e.g., via a virtual machine(s) executing on a physical processing node(s) in a network(s)). As illustrated, in this example, the radio access node 700 includes the control system 702 that includes the one or more processors 704 (e.g., CPUs, ASICs, FPGAs, and/or the like), the memory 706, and the network interface 708 and the one or more radio units 710 that each includes the one or more transmitters 712 and the one or more receivers 714 coupled to the one or more antennas 716, as described above. The control system 702 is connected to the radio unit(s) 710 via, for example, an optical cable or the like. The control system 702 is connected to one or more processing nodes 800 coupled to or included as part of a network(s) 802 via the network interface 708. Each processing node 800 includes one or more processors 804 (e.g., CPUs, ASICs, FPGAs, and/or the like), memory 806, and a network interface 808.

In this example, functions 810 of the radio access node 700 described herein (e.g., one or more functions of base station 506-A or 506-B described above with respect to Figure 6) are implemented at the one or more processing nodes 800 or distributed across the control system 702 and the one or more processing nodes 800 in any desired manner. In some particular embodiments, some or all of the functions 810 of the radio access node 700 described herein are implemented as virtual components executed by one or more virtual machines implemented in a virtual environment(s) hosted by the processing node(s) 800. As will be appreciated by one of ordinary skill in the art, additional signaling or communication between the processing node(s) 800 and the control system 702 is used in order to carry out at least some of the desired functions 810. Notably, in some embodiments, the control system 702 may not be included, in which case the radio unit(s) 710 communicate directly with the processing node(s) 800 via an appropriate network interface(s).

In some embodiments, a computer program including instructions which, when executed by at least one processor, causes the at least one processor to carry out the functionality of radio access node 700 or a node (e.g., a processing node 800) implementing one or more of the functions 810 of the radio access node 700 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 9 is a schematic block diagram of the radio access node 700 according to some other embodiments of the present disclosure. The radio access node 700 includes one or more modules 900, each of which is implemented in software. The module(s) 900 provide the functionality of the radio access node 700 described herein (e.g., one or more functions of base station 506-A or 506-B described above with respect to Figure 6). This discussion is equally applicable to the processing node 800 of Figure 8 where the modules 900 may be implemented at one of the processing nodes 800 or distributed across multiple processing nodes 800 and/or distributed across the processing node(s) 800 and the control system 702.

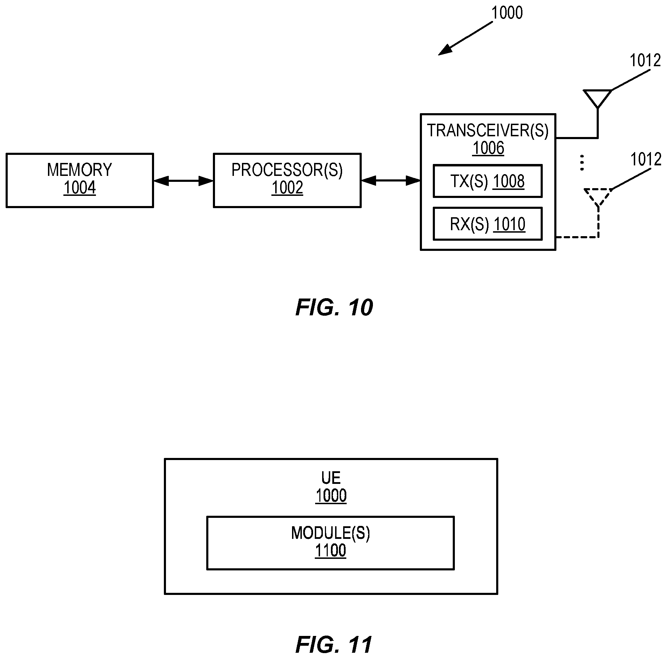

Figure 10 is a schematic block diagram of a UE 1000 according to some embodiments of the present disclosure. As illustrated, the UE 1000 includes one or more processors 1002 (e.g., CPUs, ASICs, FPGAs, and/or the like), memory 1004, and one or more transceivers 1006 each including one or more transmitters 1008 and one or more receivers 1010 coupled to one or more antennas 1012. The transceiver(s) 1006 includes radio-front end circuitry connected to the antenna(s) 1012 that is configured to condition signals communicated between the antenna(s) 1012 and the processor(s) 1002, as will be appreciated by on of ordinary skill in the art. The processors 1002 are also referred to herein as processing circuitry. The transceivers 1006 are also referred to herein as radio circuitry. In some embodiments, the functionality of the UE 1000 described above (e.g., one or more functions of a UE, e.g., the UE 512, described above, e.g., with respect to Figure 6) may be fully or partially implemented in software that is, e.g., stored in the memory 1004 and executed by the processor(s) 1002. Note that the UE 1000 may include additional components not illustrated in Figure 10 such as, e.g., one or more user interface components (e.g., an input/output interface including a display, buttons, a touch screen, a microphone, a speaker(s), and/or the like and/or any other components for allowing input of information into the UE 1000 and/or allowing output of information from the UE 1000), a power supply (e.g., a battery and associated power circuitry), etc.

In some embodiments, a computer program including instructions which, when executed by at least one processor, causes the at least one processor to carry out the
functionality of the UE 1000 according to any of the embodiments described herein (e.g., one or more functions of a UE, e.g., the UE 512, described above, e.g., with respect to Figure 6) is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 11 is a schematic block diagram of the UE 1000 according to some other embodiments of the present disclosure. The UE 1000 includes one or more modules 1100, each of which is implemented in software. The module(s) 1100 provide the functionality of the UE 1000 described herein (e.g., one or more functions of a UE, e.g., the UE 512, described above, e.g., with respect to Figure 6).

## Claims

1. A method performed by a wireless device (512) for idle mode measurements while the wireless device is in an idle or inactive state, the method comprising:
• obtaining (600 and/or 602), on a first cell (504-1), first measurement configurations for a first set of carriers comprising:
- one or more overlapping carriers, wherein an overlapping carrier is a carrier that is configured for both idle mode measurements and inter-frequency mobility measurements,
- one or more non-overlapping carriers, wherein a non-overlapping carrier is a carrier that is configured for idle mode measurements but not for inter-frequency mobility measurements, or
- both one or more overlapping carriers and one or more non-overlapping carriers;
• transitioning (604) to a dormant state; and
• while in the dormant state:
- performing (610) a cell re-selection from the first cell to a second cell (504-2) while an idle mode measurement duration timer is running;
- obtaining (610), from the second cell, second measurement configurations for a second set of carriers comprising one or more overlapping carriers, one or more non-overlapping carriers, or both one or more overlapping carriers and one or more non-overlapping carriers;
**characterized by**
- performing (612) one or more actions in response to one or more mismatches between the first measurement configurations and the second measurement configurations, wherein
- the one or more actions comprise replacing a measurement configuration from among the first measurement configurations with a mismatching measurement configuration from among the second measurement configurations, and
- keeping a measurement configuration from among the first measurement configurations and ignoring the mismatching measurement configuration from among the second measurement configurations.

2. The method of claim 1 wherein the one or more mismatches comprise a mismatch between a dedicated measurement configuration in the first cell and a broadcasted measurement configuration in the second cell.

3. The method of claim 1 or 2 wherein the one or more mismatches comprise a mismatch between a broadcasted measurement configuration in the first cell and a broadcasted measurement configuration in the second cell.

4. The method of any of claims 1 to 3 further comprising, while in the dormant state and prior to performing (608) the cell re-selection:
starting (606) the idle mode measurement duration timer; and
performing (606) idle mode measurements in accordance with the first measurement configurations while the idle mode measurement duration timer is running.

5. The method of any of claims 1 to 4 further comprising, while in the dormant state and prior to performing (610) the cell re-selection, performing (608) inter-frequency mobility measurements on the one or more overlapping carriers in the first set of carriers in accordance with the first measurement configurations.

6. The method of any one of claims 1 to 5 wherein:
• a particular carrier is an overlapping carrier in both the first set of carriers and the second set of carriers;
• the first measurement configuration for the particular carrier on the first cell is different than the second measurement configuration for the particular carrier on the second cell; and
• performing (612) the one or more actions in response to the one or more mismatches between the first measurement configurations and the second measurement configurations comprises:
- keeping (612-1A1) the first measurement configuration for the particular carrier; and
- ignoring (612-1A2) the second measurement configuration for the particular carrier.

7. The method of any one of claims 1 to 5 wherein:
• a particular carrier is an overlapping carrier in both the first set of carriers and the second set of carriers;
• the first measurement configuration for the particular carrier on the first cell is different than the second measurement configuration for the particular carrier on the second cell; and
• performing (612) the one or more actions in response to the one or more mismatches between the first measurement configurations and the second measurement configurations comprises:
- replacing (612-1B1) the first measurement configuration for the particular carrier with the second measurement configuration for the particular carrier; and
- performing (612-1B2) measurements for the particular carrier in accordance with the second measurement configuration for the particular carrier.

8. The method of any one of claims 1 to 5 wherein:
a particular carrier is an overlapping carrier in both the first set of carriers and the second set of carriers;
the first measurement configuration for the particular carrier on the first cell is different than the second measurement configuration for the particular carrier on the second cell; and
performing (612) the one or more actions in response to the one or more mismatches between the first measurement configurations and the second measurement configurations comprises stopping (612-1C1) performing measurements, including idle mode measurements and if applicable inter-frequency mobility measurements, on the particular carrier.

9. The method of any one of claims 1 to 5 wherein:
a particular carrier is an overlapping carrier in both the first set of carriers and the second set of carriers;
the first measurement configuration for the particular carrier on the first cell is different than the second measurement configuration for the particular carrier on the second cell; and
performing (612) the one or more actions in response to the one or more mismatches between the first measurement configurations and the second measurement configurations comprises pausing (612-1D1) performing measurements, including idle mode measurements and if applicable inter-frequency mobility measurements, on the particular carrier.

10. The method of any one of claims 1 to 5 wherein:
• a particular carrier is in the first set of carriers as an overlapping carrier but is not in the second set of carriers as an overlapping carrier; and
• performing (612) the one or more actions in response to the one or more mismatches between the first measurement configurations and the second measurement configurations comprises:
- continuing (612-2A1) to perform idle mode measurements on the particular carrier in accordance with the first measurement configuration for the particular carrier; and
- performing (612-2A2) inter-frequency mobility measurements for cell re-selection on the particular carrier in accordance with the second measurement configurations.

11. The method of any one of claims 1 to 5 wherein:
a particular carrier is in the first set of carriers as an overlapping carrier but is not in the second set of carriers as an overlapping carrier; and
performing (612) the one or more actions in response to the one or more mismatches between the first measurement configurations and the second measurement configurations comprises stopping (612-2B1) performing measurements, including both idle mode measurements and inter-frequency mobility measurements, on the particular carrier.

12. The method of any one of claims 1 to 5 wherein:
a particular carrier is in the first set of carriers as an overlapping carrier but is not in the second set of carriers as an overlapping carrier; and
performing (612) the one or more actions in response to the one or more mismatches between the first measurement configurations and the second measurement configurations comprises pausing (612-2C1) performing measurements, including both idle mode measurements and inter-frequency mobility measurements, on the particular carrier.

13. The method of any one of claims 1 to 5 wherein:
a particular carrier is in the first set of carriers as a non-overlapping carrier;
the particular carrier is in the second set of carriers as an overlapping carrier; and
performing (612) the one or more actions in response to the one or more mismatches between the first measurement configurations and the second measurement configurations comprises performing (612-3A1) measurements on the particular carrier in accordance with the first measurement configuration for the particular carrier.

14. The method of any one of claims 1 to 5 wherein:
• a particular carrier is in the first set of carriers as non-overlapping carrier;
• the particular carrier is in the second set of carriers as an overlapping carrier; and
• performing (612) the one or more actions in response to the one or more mismatches between the first measurement configurations and the second measurement configurations comprises:
- replacing (612-3B1) the first measurement configuration for the particular carrier with the second measurement configuration for the particular carrier; and
- performing (612-3B2) measurements on the particular carrier in accordance with the second measurement configuration for the particular carrier.

15. A wireless device (512; 1000) for idle mode measurements while the wireless device (512; 1000) is in an idle or inactive state, the wireless device (512; 1000) adapted to perform the method of any of claims 1 to 14.

## Patentansprüche

1. Verfahren, das durch eine drahtlose Vorrichtung (512) für Ruhemodusmessungen durchgeführt wird, während sich die drahtlose Vorrichtung in einem Ruhezustand oder inaktiven Zustand befindet, wobei das Verfahren Folgendes umfasst:
• Erlangen (600 und/oder 602), auf einer ersten Zelle (504-1), von ersten Messkonfigurationen für einen ersten Satz von Trägern, umfassend:
- einen oder mehrere überlappende Träger, wobei ein überlappender Träger ein Träger ist, der sowohl für Ruhemodusmessungen als auch für Inter-Frequenz-Mobilitätsmessungen konfiguriert ist,
- einen oder mehrere nicht überlappende Träger, wobei ein nicht überlappender Träger ein Träger ist, der für Ruhemodusmessungen, aber nicht für Inter-Frequenz-Mobilitätsmessungen konfiguriert ist, oder
- sowohl einen oder mehrere überlappende Träger als auch einen oder mehrere nicht überlappende Träger;
• Übergehen (604) zu einem Schlafzustand; und
• während des Schlafzustands:
- Durchführen (610) einer Zellenneuauswahl von der ersten Zelle zu einer zweiten Zelle (504-2), während ein Zeitgeber für die Dauer der Ruhemodusmessungen läuft;
- Erlangen (610), von der zweiten Zelle, von zweiten Messkonfigurationen für einen zweiten Satz von Trägern, umfassend einen oder mehrere überlappende Träger, einen oder mehrere nicht überlappende Träger oder sowohl einen oder mehrere überlappende Träger als auch einen oder mehrere nicht überlappende Träger;
**gekennzeichnet durch**
- Durchführen (612) einer oder mehrerer Handlungen als Reaktion auf eine oder mehrere Fehlanpassungen zwischen den ersten Messkonfigurationen und den zweiten Messkonfigurationen, wobei
- die eine oder die mehreren Handlungen Folgendes umfassen: Ersetzen einer Messkonfiguration aus den ersten Messkonfigurationen durch eine fehlangepasste Messkonfiguration aus den zweiten Messkonfigurationen und
- Behalten einer Messkonfiguration aus den ersten Messkonfigurationen und Ignorieren der fehlangepassten Messkonfiguration aus den zweiten Messkonfigurationen.

2. Verfahren nach Anspruch 1, wobei die eine oder die mehreren Fehlanpassungen eine Fehlanpassung zwischen einer dedizierten Messkonfiguration in der ersten Zelle und einer ausgesendeten Messkonfiguration in der zweiten Zelle umfassen.

3. Verfahren nach Anspruch 1 oder 2, wobei die eine oder die mehreren Fehlanpassungen eine Fehlanpassung zwischen einer ausgesendeten Messkonfiguration in der ersten Zelle und einer ausgesendeten Messkonfiguration in der zweiten Zelle umfassen.

4. Verfahren nach einem der Ansprüche 1 bis 3, ferner umfassend, während des Schlafzustands und vor dem Durchführen (608) der Zellenneuauswahl:
Starten (606) des Zeitgebers für die Dauer der Ruhemodusmessungen; und
Durchführen (606) von Ruhemodusmessungen gemäß den ersten Messkonfigurationen, während der Zeitgeber für die Dauer der Ruhemodusmessungen läuft.

5. Verfahren nach einem der Ansprüche 1 bis 4, ferner umfassend, während des Schlafzustands und vor dem Durchführen (610) der Zellenneuauswahl, Durchführen (608) von Inter-Frequenz-Mobilitätsmessungen auf dem einen oder den mehreren überlappenden Trägern in dem ersten Satz von Trägern gemäß den ersten Messkonfigurationen.

6. Verfahren nach einem der Ansprüche 1 bis 5, wobei:
• ein konkreter Träger ein überlappender Träger sowohl in dem ersten Satz von Trägern als auch in dem zweiten Satz von Trägern ist;
• sich die erste Messkonfiguration für den konkreten Träger auf der ersten Zelle von der zweiten Messkonfiguration für den konkreten Träger auf der zweiten Zelle unterscheidet; und
• das Durchführen (612) der einen oder der mehreren Handlungen als Reaktion auf die eine oder die mehreren Fehlanpassungen zwischen den ersten Messkonfigurationen und den zweiten Messkonfigurationen Folgendes umfasst:
- Behalten (612-1A1) der ersten Messkonfiguration für den konkreten Träger; und
- Ignorieren (612-1A2) der zweiten Messkonfiguration für den konkreten Träger.

7. Verfahren nach einem der Ansprüche 1 bis 5, wobei:
• ein konkreter Träger ein überlappender Träger sowohl in dem ersten Satz von Trägern als auch in dem zweiten Satz von Trägern ist;
• sich die erste Messkonfiguration für den konkreten Träger auf der ersten Zelle von der zweiten Messkonfiguration für den konkreten Träger auf der zweiten Zelle unterscheidet; und
• das Durchführen (612) der einen oder der mehreren Handlungen als Reaktion auf die eine oder die mehreren Fehlanpassungen zwischen den ersten Messkonfigurationen und den zweiten Messkonfigurationen Folgendes umfasst:
- Ersetzen (612-1B1) der ersten Messkonfiguration für den konkreten Träger durch die zweite Messkonfiguration für den konkreten Träger; und
- Durchführen (612-1B2) von Messungen für den konkreten Träger gemäß der zweiten Messkonfiguration für den konkreten Träger.

8. Verfahren nach einem der Ansprüche 1 bis 5, wobei:
ein konkreter Träger ein überlappender Träger sowohl in dem ersten Satz von Trägern als auch in dem zweiten Satz von Trägern ist;
sich die erste Messkonfiguration für den konkreten Träger auf der ersten Zelle von der zweiten Messkonfiguration für den konkreten Träger auf der zweiten Zelle unterscheidet; und
das Durchführen (612) der einen oder der mehreren Handlungen als Reaktion auf die eine oder die mehreren Fehlanpassungen zwischen den ersten Messkonfigurationen und den zweiten Messkonfigurationen Anhalten (612-1C1) des Durchführens von Messungen, einschließlich Ruhemodusmessungen und, falls zutreffend, Inter-Frequenz-Mobilitätsmessungen, auf dem konkreten Träger umfasst.

9. Verfahren nach einem der Ansprüche 1 bis 5, wobei:
ein konkreter Träger ein überlappender Träger sowohl in dem ersten Satz von Trägern als auch in dem zweiten Satz von Trägern ist;
sich die erste Messkonfiguration für den konkreten Träger auf der ersten Zelle von der zweiten Messkonfiguration für den konkreten Träger auf der zweiten Zelle unterscheidet; und
das Durchführen (612) der einen oder der mehreren Handlungen als Reaktion auf die eine oder die mehreren Fehlanpassungen zwischen den ersten Messkonfigurationen und den zweiten Messkonfigurationen Pausieren (612-1D1) des Durchführens von Messungen, einschließlich Ruhemodusmessungen und, falls zutreffend, Inter-Frequenz-Mobilitätsmessungen, auf dem konkreten Träger umfasst.

10. Verfahren nach einem der Ansprüche 1 bis 5, wobei:
• ein konkreter Träger als überlappender Träger in dem ersten Satz von Trägern ist, aber nicht als überlappender Träger in dem zweiten Satz von Trägern ist; und
• das Durchführen (612) der einen oder der mehreren Handlungen als Reaktion auf die eine oder die mehreren Fehlanpassungen zwischen den ersten Messkonfigurationen und den zweiten Messkonfigurationen Folgendes umfasst:
- Fortsetzen (612-2A1) des Durchführens von Ruhemodusmessungen auf dem konkreten Träger gemäß der ersten Messkonfiguration für den konkreten Träger; und
- Durchführen (612-2A2) von Inter-Frequenz-Mobilitätsmessungen zur Zellenneuauswahl auf dem konkreten Träger gemäß den zweiten Messkonfigurationen.

11. Verfahren nach einem der Ansprüche 1 bis 5, wobei:
ein konkreter Träger als überlappender Träger in dem ersten Satz von Trägern ist, aber nicht als überlappender Träger in dem zweiten Satz von Trägern ist; und
das Durchführen (612) der einen oder der mehreren Handlungen als Reaktion auf die eine oder die mehreren Fehlanpassungen zwischen den ersten Messkonfigurationen und den zweiten Messkonfigurationen Anhalten (612-2B1) des Durchführens von Messungen, einschließlich sowohl Ruhemodusmessungen als auch Inter-Frequenz-Mobilitätsmessungen, auf dem konkreten Träger umfasst.

12. Verfahren nach einem der Ansprüche 1 bis 5, wobei:
ein konkreter Träger als überlappender Träger in dem ersten Satz von Trägern ist, aber nicht als überlappender Träger in dem zweiten Satz von Trägern ist; und
das Durchführen (612) der einen oder der mehreren Handlungen als Reaktion auf die eine oder die mehreren Fehlanpassungen zwischen den ersten Messkonfigurationen und den zweiten Messkonfigurationen Pausieren (612-2C1) des Durchführens von Messungen, einschließlich sowohl Ruhemodusmessungen als auch Inter-Frequenz-Mobilitätsmessungen, auf dem konkreten Träger umfasst.

13. Verfahren nach einem der Ansprüche 1 bis 5, wobei:
ein konkreter Träger als nicht überlappender Träger in dem ersten Satz von Trägern ist;
der konkrete Träger als überlappender Träger in dem zweiten Satz von Trägern ist; und
das Durchführen (612) der einen oder der mehreren Handlungen als Reaktion auf die eine oder die mehreren Fehlanpassungen zwischen den ersten Messkonfigurationen und den zweiten Messkonfigurationen Durchführen (612-3A1) von Messungen auf dem konkreten Träger gemäß der ersten Messkonfiguration für den konkreten Träger umfasst.

14. Verfahren nach einem der Ansprüche 1 bis 5, wobei:
• ein konkreter Träger als nicht überlappender Träger in dem ersten Satz von Trägern ist;
• der konkrete Träger als überlappender Träger in dem zweiten Satz von Trägern ist; und
• das Durchführen (612) der einen oder der mehreren Handlungen als Reaktion auf die eine oder die mehreren Fehlanpassungen zwischen den ersten Messkonfigurationen und den zweiten Messkonfigurationen Folgendes umfasst:
- Ersetzen (612-3B1) der ersten Messkonfiguration für den konkreten Träger durch die zweite Messkonfiguration für den konkreten Träger; und
- Durchführen (612-3B2) von Messungen auf dem konkreten Träger gemäß der zweiten Messkonfiguration für den konkreten Träger.

15. Drahtlose Vorrichtung (512; 1000) für Ruhemodusmessungen, während sich die drahtlose Vorrichtung (512; 1000) in einem Ruhezustand oder inaktiven Zustand befindet, wobei die drahtlose Vorrichtung (512; 1000) dazu ausgelegt ist, das Verfahren nach einem der Ansprüche 1 bis 14 durchzuführen.

## Revendications

1. Procédé exécuté par un dispositif sans fil (512) pour des mesures de mode veille tandis que le dispositif sans fil est dans un état de veille ou inactif, le procédé comprenant :
• l'obtention (600 et/ou 602), sur une première cellule (504-1), de premières configurations de mesure pour un premier ensemble de porteuses comprenant :
- une ou plusieurs porteuses se chevauchant, dans lequel une porteuse se chevauchant est une porteuse qui est configurée à la fois pour des mesures de mode veille et des mesures de mobilité interfréquence,
- une ou plusieurs porteuses sans chevauchement, dans lequel une porteuse sans chevauchement est une porteuse qui est configurée pour des mesures de mode veille mais pas pour des mesures de mobilité interfréquence, ou
- à la fois une ou plusieurs porteuses se chevauchant et une ou plusieurs porteuses sans chevauchement ;
• la transition (604) vers un état dormant ; et
• à l'état dormant :
- l'exécution (610) d'une resélection de cellule de la première cellule à une seconde cellule (504-2) pendant qu'un temporisateur de durée de mesure de mode inactif est en cours d'exécution ;
- l'obtention (610), à partir de la seconde cellule, de secondes configurations de mesure pour un second ensemble de porteuses comprenant une ou plusieurs porteuses chevauchant, une ou plusieurs porteuses sans chevauchement, ou à la fois une ou plusieurs porteuses se chevauchant et une ou plusieurs porteuses sans chevauchement ;
**caractérisé par**
- l'exécution (612) d'une ou de plusieurs actions en réponse à une ou plusieurs discordances entre les premières configurations de mesure et les secondes configurations de mesure, dans lequel
- les une ou plusieurs actions comprennent le remplacement d'une configuration de mesure parmi les premières configurations de mesure par une configuration de mesure non concordante parmi les secondes configurations de mesure, et
- la conservation d'une configuration de mesure parmi les premières configurations de mesure et l'ignorance de la configuration de mesure non concordante parmi les secondes configurations de mesure.

2. Procédé selon la revendication 1, dans lequel les une ou plusieurs discordances comprennent une discordance entre une configuration de mesure dédiée dans la première cellule et une configuration de mesure diffusée dans la seconde cellule.

3. Procédé selon la revendication 1 ou 2, dans lequel les une ou plusieurs discordances comprennent une discordance entre une configuration de mesure diffusée dans la première cellule et une configuration de mesure diffusée dans la seconde cellule.

4. Procédé selon l'une quelconque des revendications 1 à 3 comprenant en outre, pendant l'état dormant et avant d'exécuter (608) la resélection de cellule :
le démarrage (606) du temporisateur de durée de mesure de mode inactif ; et
l'exécution (606) de mesures de mode inactif conformément aux premières configurations de mesure pendant que le temporisateur de durée de mesure de mode inactif est en cours d'exécution.

5. Procédé selon l'une quelconque des revendications 1 à 4, comprenant en outre, pendant l'état dormant et avant d'exécuter (610) la resélection de cellule, l'exécution (608) de mesures de mobilité interfréquence sur les une ou plusieurs porteuses se chevauchant dans le premier ensemble de porteuses conformément aux premières configurations de mesure.

6. Procédé selon l'une quelconque des revendications 1 à 5, dans lequel :
• une porteuse particulière est une porteuse se chevauchant à la fois dans le premier ensemble de porteuses et dans le second ensemble de porteuses ;
• la première configuration de mesure pour la porteuse particulière sur la première cellule est différente de la seconde configuration de mesure pour la porteuse particulière sur la seconde cellule ; et
• l'exécution (612) des une ou plusieurs actions en réponse aux une ou plusieurs discordances entre les premières configurations de mesure et les secondes configurations de mesure comprend :
- la conservation (612-1A1) de la première configuration de mesure pour la porteuse particulière ; et
- l'ignorance (612-1A2) de la seconde configuration de mesure pour la porteuse particulière.

7. Procédé selon l'une quelconque des revendications 1 à 5, dans lequel :
• une porteuse particulière est une porteuse se chevauchant à la fois dans le premier ensemble de porteuses et dans le second ensemble de porteuses ;
• la première configuration de mesure pour la porteuse particulière sur la première cellule est différente de la seconde configuration de mesure pour la porteuse particulière sur la seconde cellule ; et
• l'exécution (612) des une ou plusieurs actions en réponse aux une ou plusieurs discordances entre les premières configurations de mesure et les secondes configurations de mesure comprend :
- le remplacement (612-1B1) de la première configuration de mesure pour la porteuse particulière par la seconde configuration de mesure pour la porteuse particulière ; et
- l'exécution (612-1B2) de mesures pour la porteuse particulière conformément à la seconde configuration de mesure pour la porteuse particulière.

8. Procédé selon l'une quelconque des revendications 1 à 5, dans lequel :
une porteuse particulière est une porteuse se chevauchant à la fois dans le premier ensemble de porteuses et dans le second ensemble de porteuses ;
la première configuration de mesure pour la porteuse particulière sur la première cellule est différente de la seconde configuration de mesure pour la porteuse particulière sur la seconde cellule ; et
l'exécution (612) des une ou plusieurs actions en réponse aux une ou plusieurs discordances entre les premières configurations de mesure et les secondes configurations de mesure comprend l'arrêt (612-1C1) de l'exécution des mesures, y compris les mesures de mode veille et, le cas échéant, les mesures de mobilité interfréquence, sur la porteuse particulière.

9. Procédé selon l'une quelconque des revendications 1 à 5, dans lequel :
une porteuse particulière est une porteuse se chevauchant à la fois dans le premier ensemble de porteuses et dans le second ensemble de porteuses ;
la première configuration de mesure pour la porteuse particulière sur la première cellule est différente de la seconde configuration de mesure pour la porteuse particulière sur la seconde cellule ; et
l'exécution (612) des une ou plusieurs actions en réponse aux une ou plusieurs discordances entre les premières configurations de mesure et les secondes configurations de mesure comprend la mise en pause (612-1D1) de l'exécution des mesures, y compris les mesures de mode veille et, le cas échéant, les mesures de mobilité interfréquence, sur la porteuse particulière.

10. Procédé selon l'une quelconque des revendications 1 à 5, dans lequel :
• une porteuse particulière est dans le premier ensemble de porteuses en tant que porteuse se chevauchant mais n'est pas dans le second ensemble de porteuses en tant que porteuse se chevauchant ; et
• l'exécution (612) des une ou plusieurs actions en réponse aux une ou plusieurs discordances entre les premières configurations de mesure et les secondes configurations de mesure comprend :
- la poursuite (612-2A1) de l'exécution de mesures de mode inactif sur la porteuse particulière conformément à la première configuration de mesure pour la porteuse particulière ; et
- l'exécution (612-2A2) de mesures de mobilité interfréquence pour une resélection de cellule sur la porteuse particulière conformément aux secondes configurations de mesure.

11. Procédé selon l'une quelconque des revendications 1 à 5, dans lequel :
une porteuse particulière est dans le premier ensemble de porteuses en tant que porteuse se chevauchant mais n'est pas dans le second ensemble de porteuses en tant que porteuse se chevauchant ; et
l'exécution (612) des une ou plusieurs actions en réponse aux une ou plusieurs discordances entre les premières configurations de mesure et les secondes configurations de mesure comprend l'arrêt (612-2B1) de l'exécution des mesures, y compris à la fois des mesures de mode veille et des mesures de mobilité interfréquence, sur la porteuse particulière.

12. Procédé selon l'une quelconque des revendications 1 à 5, dans lequel :
une porteuse particulière est dans le premier ensemble de porteuses en tant que porteuse se chevauchant mais n'est pas dans le second ensemble de porteuses en tant que porteuse se chevauchant ; et
l'exécution (612) des une ou plusieurs actions en réponse aux une ou plusieurs discordances entre les premières configurations de mesure et les secondes configurations de mesure comprend la mise en pause (612-2C1) de l'exécution de mesures, y compris à la fois des mesures de mode veille et des mesures de mobilité interfréquence, sur la porteuse particulière.

13. Procédé selon l'une quelconque des revendications 1 à 5, dans lequel :
une porteuse particulière est dans le premier ensemble de porteuses en tant que porteuse sans chevauchement ;
la porteuse particulière est dans le second ensemble de porteuses en tant que porteuses se chevauchant ; et
l'exécution (612) des une ou plusieurs actions en réponse aux une ou plusieurs discordances entre les premières configurations de mesure et les secondes configurations de mesure comprend l'exécution (612-3A1) de mesures sur la porteuse particulière conformément à la première configuration de mesure pour la porteuse particulière.

14. Procédé selon l'une quelconque des revendications 1 à 5, dans lequel :
• une porteuse particulière est dans le premier ensemble de porteuses en tant que porteuse sans chevauchement ;
• la porteuse particulière est dans le second ensemble de porteuses en tant que porteuse se chevauchant ;
et
• l'exécution (612) des une ou plusieurs actions en réponse aux une ou plusieurs discordances entre les premières configurations de mesure et les secondes configurations de mesure comprend :
- le remplacement (612-3B1) de la première configuration de mesure pour la porteuse particulière par la seconde configuration de mesure pour la porteuse particulière ; et
- l'exécution (612-3B2) de mesures sur la porteuse particulière conformément à la seconde configuration de mesure pour la porteuse particulière.

15. Dispositif sans fil (512 ; 1000) pour des mesures de mode inactif tandis que le dispositif sans fil (512 ; 1000) est dans un état de veille ou inactif, le dispositif sans fil (512 ; 1000) étant conçu pour exécuter le procédé selon l'une quelconque des revendications 1 à 14.
